# EUROPEAN PATENT SPECIFICATION

(11) **EP 3 355 612 B1**
(45) Date of publication and mention of the grant of the patent: **04.08.2021**
(21) Application number: 16848505.0
(22) Date of filing: 08.09.2016
(51) Int. Cl.: H04W 28/04, H04J 1/00, H04J 11/00, H04W 72/04, H04L 1/18

(54) **USER TERMINAL, WIRELESS BASE STATION, AND WIRELESS COMMUNICATION METHOD**
BENUTZERENDGERÄT, DRAHTLOSE BASISSTATION UND DRAHTLOSKOMMUNIKATIONSVERFAHREN
TERMINAL D'UTILISATEUR, STATION DE BASE SANS FIL ET PROCÉDÉ DE COMMUNICATION SANS FIL

(30) Priority: 24.09.2015 JP 2015187472
(43) Date of publication of application: 01.08.2018
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP)
(74) Representative: Hoffmann Eitle
(86) International application number: PCT/JP2016/076486
(87) International publication number: WO 2017/051717

(56) References cited:
- ZTE ET AL: "Way Forward on UL HARQ-ACK codebook size for CA up to 32 CCs", 3GPP DRAFT; R1-154782 WF ON HARQ-ACK CODEBOOK SIZE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 30 August 2015 (2015-08-30), XP051044139, Retrieved from the Internet: URL:http://www.3gpp.org/ftp/tsg_ran/WG1_RL 1/TSGR1_82/Docs/ [retrieved on 2015-08-30]
- INSTITUTE FOR INFORMATION INDUSTRY (III): "HARQ-ACK codebook size determination for CA with up to 32 CCs", 3GPP DRAFT; R1-154667_HARQ-ACK CODEBOOK SIZE DETERMINATION FOR CA WITH UP TO 32 CCS, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG1, no. Beijing, China; 20150824 - 20150828 23 August 2015 (2015-08-23), XP051039546, Retrieved from the Internet: URL:http://www.3gpp.org/ftp/Meetings_3GPP_ SYNC/RAN1/Docs/ [retrieved on 2015-08-23]
- ZTE: "Adaptive HARQ-ACK codebook size determination", 3GPP DRAFT; R1-154036 ADAPTIVE HARQ-ACK CODEBOOK SIZE DETERMINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG1, no. Beijing, China; 20150824 - 20150828 23 August 2015 (2015-08-23), XP051001428, Retrieved from the Internet: URL:http://www.3gpp.org/ftp/Meetings_3GPP_ SYNC/RAN1/Docs/ [retrieved on 2015-08-23]
- INTERDIGITAL COMMUNICATIONS: 'HARQ-ACK codebook determination' 3GPP TSG-RAN WG1 MEETING #82 R1-154309 14 August 2015, XP051039450
- ZTE: 'HARQ-ACK compression for eCA' 3GPP TSG RAN WG1 MEETING #82 R1-154034 15 August 2015, XP050994324
- NTT DOCOMO, INC.: 'Dynamic HARQ-ACK feedback adaptation for CA enhancements' 3GPP TSG RAN WG1 MEETING #82BIS RL-155691 26 September 2015, pages 1 - 10, XP051021697 Retrieved from the Internet: <URL:HTTP://WWW.3GPP.ORG/FTP/TSG_RAN/WG1_RL 1/TSGR1_82B/DOCS/>

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, the specifications of LTE-A (also referred to as LTE-advanced, LTE Rel. 10, 11 or 12) have been drafted for further broadbandization and increased speed beyond LTE (also referred to as LTE Rel. 8 or 9), and successor systems of LTE (also referred to as, for example, FRA (Future Radio Access), 5G (5th generation mobile communication system), LTE Rel. 13 and so on) are under study.

Also, the specifications of LTE-A (also referred to as "LTE-advanced," "LTE Rel. 10," "LTE Rel. 11" or "LTE Rel. 12") have been drafted for further broadbandization and increased speed beyond LTE (also referred to as LTE Rel. 8 or 9), and successor systems of LTE (also referred to as, for example, "FRA" (Future Radio Access), "5G" (5th generation mobile communication system), "LTE Rel. 13" and so on) are under study. Carriers that constitute the fundamental units in carrier aggregation are referred to as "component carriers" (CCs), and are equivalent to the system band of LTE Rel. 8.

When CA is used, in a user terminal (UE: User Equipment), a primary cell (PCell: Primary Cell), which is a cell with high reliability to ensure connectivity, and a secondary cell (SCell: Secondary Cell) which is an adjunct cell, are configured.

The UE can first connect to the PCell and add the SCell if necessary. PCell is a single cell (standalone cell) that supports RLM (Radio Link Monitoring), SPS (Semi-Persistent Scheduling), and the like. SCell is a cell that is configured in UE in addition to PCell.

SCell is added and deleted by RRC (Radio Resource Control) signaling. SCell is in a deactivated state immediately after being added to the user terminal, and can only perform communication (scheduling) after being activated.

Also, the specifications of LTE Rel. 8 to 12 have been drafted assuming exclusive operations in frequency bands that are licensed to operators (licensed bands). As licensed bands, for example, the 800 MHz, 2 GHz and/or 1.7 GHz bands are used. Meanwhile, in LTE of Rel. 13 and later versions, operation in frequency bands where license is not required (unlicensed bands) is also a target of study. For unlicensed bands, for example, the 2.4 GHz and/or the 5 GHz band are used as in Wi-Fi (registered trademark).

Although carrier aggregation (LAA: license-assisted access) between licensed bands and unlicensed bands is placed under study in Rel. 13 LTE, there is a possibility that, in the future, dual connectivity (DC) and unlicensed-band stand-alone will becomes targets of study as well.

In LTE Rel. 8 to 12, HARQ (Hybrid Automatic Repeat reQuest) is used for retransmission control. In HARQ, the user terminal (or the radio base station) feeds back the delivery acknowledgment signal (also referred to as HARQ-ACK, ACK/NACK, A/N, etc.) for the data in accordance with the data reception result at a predetermined timing. The radio base station (or user terminal) controls data retransmission based on the feedback HARQ-ACK.

In the presentation entitled "Way Forward on UL HARQ-ACK codebook size for CA up to 32 CCs" (XP051044139), ZTE et al. (R1-154782, 3GPP MOBILE COMPETENCE CENTRE, SOPHIA-ANTIPOLIS, FRANCE, 30 August 2015) disclose a UE which dynamically determines HARQ-ACK codebook size and the PUCCH format. To ensure same understanding between eNB and UE regarding the HARQ-ACK codebook and the PUCCH format, eNB transmits one of the following in DL grant as alternatives: counter DAI only; a counter DAI and a Total DAI; combined DAI carrying either Counter or Total, based on the order of scheduling; or HARQ-ACK codebook indicator to indicate the possible carriers.

In the contribution entitled "HARQ-ACK codebook size determination for CA with up to 32 CCs" (XP051039546), Institute for Information Industry (R1-154667, 3GPP MOBILE COMPETENCE CENTRE, SOPHIA-ANTIPOLIS, FRANCE, 23 August 2015) disclose possible enhancements to support HARQ-ACK codebook determination in Rel-13 CA. Based on the discussion, the authors propose that dynamic HARQ-ACK codebook size determination should be supported and which HARQ-ACK codebook determination rule is used is configured by higher layer, the new DAI and the HARQ-ACK codebook determination rule should be discussed. The authors further propose that the new PUCCH format should at least support the PUCCH format 3 based format and the PUSCH based format should support very large HARQ-ACK codebook size. The authors propose to study the ARI-based signaling and the implicit indication for PUCCH resource selection.

In the contribution entitled "Adaptive HARQ-ACK codebook size determination" (XP051001428), ZTE (R1-154036, 3GPP MOBILE COMPETENCE CENTRE, SOPHIA-ANTIPOLIS, FRANCE, 23 August 2015) disclose that the number of HARQ-ACK will increase dramatically with the increased number of configured CCs. Enhancement for HARQ-ACK feedback should be considered, bringing into consideration that at least the following enhancements to UL HARQ-ACK feedback signaling need to be considered/specified in order to support the increase in UL control information: restricting increase of HARQ-ACK payload, HARQ-ACK bundling in spatial, time, and/or frequency domain, and reducing the number of HARQ-ACK feedback bits associated with non-scheduled serving cells /subframes. In this contribution, the authors discuss the determination of the number of HARQ-ACK feedback bits. Reducing associated with non-scheduled serving cells/subframes, i.e. adaptive HARQ-ACK codebook size determination, is considered and related issues are analysed.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"

### Summary of Invention

### Technical Problem

In existing LTE systems of Rel. 12 or earlier versions, the bit size of ACKs/NACKs (also referred to as the "codebook size" and the "bit sequence size") that are fed back by a user terminal is semi-statically determined in advance, based on information reported from a radio base station through higher layer signaling (the number of CCs and so on). Therefore, when applying CA, the user terminal feeds back ACKs/NACKs in a codebook size that is fixedly determined based on the number of CCs and so on.

Therefore, when the number of CCs configured in the user terminal and the number of CCs where DL signals are scheduled in a given subframe are different, the codebook size cannot be changed in the user terminal. This might result in the case where, even when the number of CCs that are actually scheduled is small, the size of ACKs/NACKs to be transmitted is unnecessarily large.

Also, although, in Rel. 12 or earlier versions, the maximum number of CCs that can be configured in CA is 5, the number of configurable CCs is expected to be increased in Rel. 13 and later versions. In this case, if the bit size of ACKs/NACKs is determined in the same way as in existing LTE systems, the number of CCs that are configured and the number of CCs that are scheduled may differ significantly. This may result in increasing the overhead of UL transmission.

Meanwhile, it may be possible to dynamically control the codebook size of HARQ-ACKs to feed back, based on, for example, DL signals received in the user terminal (for example, based on the number of CCs where DL signals are received). However, if the user terminal fails to detect DL signals or makes error detection, this may lead to the situation where the recognition of the codebook size differs between the radio base station and the user terminal. In this case, there is a possibility that the radio base station is unable to properly receive the ACKs/NACKs fed back from the user terminal (the decoding process, for example), and the quality of communication may be lowered.

The present invention has been made in view of the above, and it is therefore an object of the present invention to provide a user terminal, a radio base station and a radio communication method that enable of adequate feedback of HARQ-ACKs and that can prevent the decrease of communication quality even when a plurality of component carriers are configured in a radio communication system.

### Solution to Problem

According to one aspect of the present invention, a user terminal has a receiving section that receives DL signals transmitted from a plurality of cells that apply TDD, and a control section that performs control to transmit in a predetermined UL subframe HARQ-ACKs for the DL signals transmitted from a plurality of cells based on a bundling window defined in TDD as a grid of (subframe_index, cell_index) subframes, and the control section determines the cells whose HARQ-ACK is to be fed back based on largest HARQ-ACK codebook indicator, HCI, among the HCIs transmitted in the DL assignments that schedule the DL subframes in the bundling window and the control section further determines the number of HARQ-ACK bits based on the determined cells. Any embodiments in the description not containing these features are not according to the invention and are present for illustrative purposes only.

### Advantageous Effects of Invention

According to one aspect of the present invention, it is possible to feed back HARQ-ACKs adequately and prevent the decrease of communication quality even when a plurality of component carriers are configured in a radio communication system.

### Brief Description of Drawings

FIG. 1 is a diagram to explain carrier aggregation;
FIG. 2A and FIG. 2B are diagrams to explain a bundling window defined by TDD;
FIG. 3A is a diagram to explain DL DAI, and FIG. 3B is a diagram to explain the UL DAI;
FIG. 4A is a diagram to show an example of CA, and FIG. 4B is a diagram to show an example of recognition of scheduling CCs between a user terminal and a radio base station;
FIG. 5A and FIG. 5B are diagrams to show examples of tables in which HARQ-ACK codebook indicators (HCIs) are defined;
FIG. 6A to FIG. 6C are diagrams to show an example of a HARQ-ACK transmission method using HCI in FDD, and FIG. 6D is a diagram to show an example of a table in which HARQ-ACK codebook sets are defined;
FIG. 7A to FIG. 7E are diagrams to show another example of HARQ-ACK transmission method using HCI in FDD, and FIG. 7F is a diagram to show another example of the table in which HARQ-ACK codebook sets are defined;
FIG. 8A and FIG. 8B are diagrams to explain problems when using HCI in TDD;
FIG. 9A and FIG. 9B are diagrams to show an example of the HARQ-ACK transmission method in the first example;
FIG. 10 is a diagram to explain a resource determination method used at the time of HARQ-ACK transmission according to the first example;
FIG. 11A and FIG. 11B are diagrams to show another example of the HARQ-ACK transmission method in the first example;
FIG. 12A and FIG. 12B are diagrams to show an example of the HARQ-ACK transmission method in the second example;
FIG. 13A and FIG. 13B are diagrams to show another example of the HARQ-ACK transmission method in the second example;
FIG. 14 is a diagram to show a schematic structure of a radio communication system according to an embodiment of the present invention;
FIG. 15 is a diagram to show an example of an overall structure of a radio base station according to an embodiment of the present invention;
FIG. 16 is a diagram to show an example of a functional structure of a radio base station according to one embodiment of the present invention;
FIG. 17 is a diagram to show an example of an overall structure of a user terminal according to an embodiment of the present invention; and
FIG. 18 is a diagram to show an example of a functional structure of a user terminal according to an embodiment of the present invention.

### Description of Embodiments

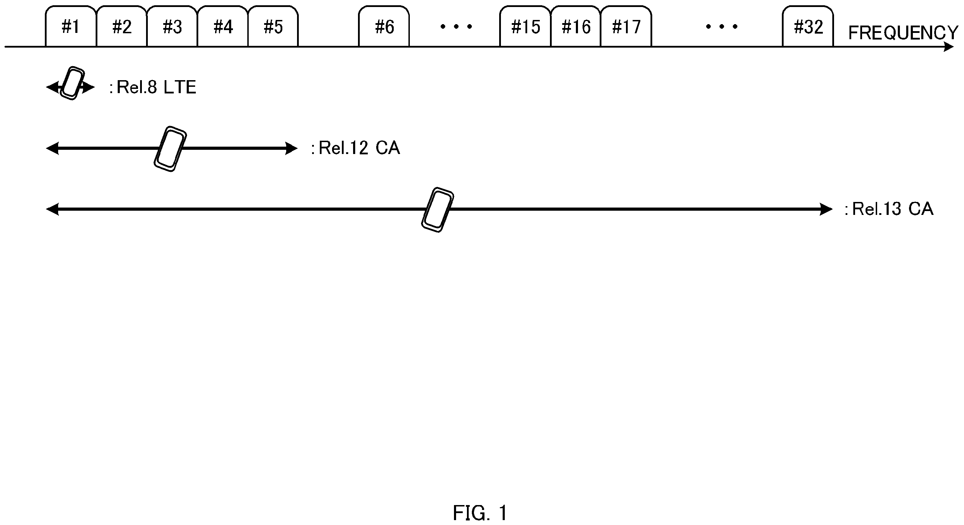

FIG. 1 is a diagram to explain carrier aggregation (CA). As shown in FIG. 1, in CA of up to LTE Rel. 12, maximum five component carriers (CCs) (CC #1 to CC #5) are bundled, where the system band of LTE Rel. 8 constitutes one unit. That is, in CA up to LTE Rel. 12, the number of CCs that can be configured per UE is limited to a maximum of five.

On the other hand, in CA of LTE Rel. 13, a study is in progress to expand the bandwidth further by bundling six or more CCs. That is, in CA of LTE Rel. 13, expansion of the number of CCs (cells) that can be configured per UE to six or more (CA enhancement) is being studied. For example, as shown in FIG. 1, when 32 CCs (CC #1 to CC #32) are bundled, a bandwidth of maximum 640 MHz can be secured.

More flexible and faster radio communication is expected to be made possible by thus reducing the limit on the number of CCs that can be configured per UE. Also, expanding the number of CCs like this is an effective way to widen the band based on CA (LAA: License-Assisted Access) between licensed bands and unlicensed bands. For example, five licensed band CCs (= 100 MHz) and fifteen unlicensed band CCs (= 300 MHz) are bundled, and a bandwidth of 400 MHz can be secured.

In existing systems (LTE Rel. 8 to 12), uplink control information (UCI) is fed back from the UE to the device on the network side (for example, a radio base station (eNB: eNode B)) via the uplink control channel (PUCCH: Physical Uplink Control Channel). The UE may transmit UCI on the uplink shared channel (PUSCH: Physical Uplink Shared Channel) at the timing when the uplink data transmission is scheduled. The radio base station performs data retransmission control and scheduling control on the UE based on the received UCI.

As described above, in the LTE system, retransmission control is supported in wireless communication between a user terminal using a plurality of CCs (cells, carriers) and a radio base station. The user terminal feeds back delivery acknowledgment signals (HARQ-ACK: Hybrid Automatic Repeat reQuest Acknowledgment, also referred to as ACK/NACK: ACKnowledgment/Negative ACKnowledgment, A/N, etc.), to the radio base station, in response to DL transmission transmitted from the radio base station. Here, ACK/NACKs are formed with a bit sequence of a predetermined length, comprised of bits that represent ACKs or NACKs.

Feedback (UCI on PUCCH) to use an uplink control channel (PUCCH) and feedback (UCI on PUSCH) to use uplink shared channel (PUSCH) are defined as methods of feeding back HARQ-ACK. For example, when simultaneous PUCCH-PUSCH transmission is not configured and transmission of UL data is commanded at A/N transmission timing, the user terminal transmits A/Ns using the PUSCH. On the other hand, if there is no uplink user data, the user terminal transmits A/Ns using the PUCCH.

Also, in the LTE system, a plurality of PUCCH formats (PUCCH format, PF, etc.) that the user terminal can use to transmit A/Ns to the radio base station via the uplink control channel are defined. For example, when PUCCH format 1a/1b is configured in the user terminal, the user terminal transmits A/N in a PUCCH resource that corresponds to a CCE/ECCE (Control Channel Element/Enhanced CCE) index of a control channel (PDCCH/EPDCCH) that schedules the PDSCH, without encoding.

Also, when PUCCH format 3 (PF3) is configured, among the four resources configured by higher layer signaling, the user terminal transmits an A/N using one PUCCH resource specified by ARI (Ack/nack Resource Indicator). In this case, the user terminal can read the TPC (Transmit Power Control) field (TPC command bit) included in the downlink control information of SCell as an ARI.

The radio base station can configure the same ARI value between PDCCHs/EPDCCHs scheduling different SCells' PDSCHs, and transmit them to the user terminal. In PUCCH format 3, when FDD (Frequency Division Duplex) is used, a codebook size of maximum 10 bits is configured, and, when TDD (Time Division Duplex) is used, a codebook size of maximum 21 bits is configured, and these are used for ACKs/NACKs.

In existing systems (LTE Rel. 10 to 12), as mentioned earlier, the codebook size of HARQ-ACKs (ACK/NACK bit sequence) to be transmitted on the PUCCH is determined semi-statically based on information reported by higher layer signaling.

In the case of using FDD, the overall A/N bit size is determined based on the number of CCs configured by RRC signaling and the TM (Transmission Mode), which indicates whether MIMO (Multiple Input Multiple Output) is applicable in each CC. In a certain DL subframe, if a DL assignment is detected in at least one SCell, the user terminal feeds back A/Ns for all the CCs configured in the UL subframe after a predetermined period (for example, 4 ms).

When TDD is used, in addition to the above case using FDD, the overall size of the A/N bit sequence transmitted on the PUCCH is determined based on the number of DL subframes addressed by A/Ns per UL subframe. When the user terminal using TDD detects at least one DL assignment in the bundling window, the user terminal feeds back A/Ns for all the configured CCs using the PUCCH in the UL subframe after a predetermined period (for example, (n+k) ms).

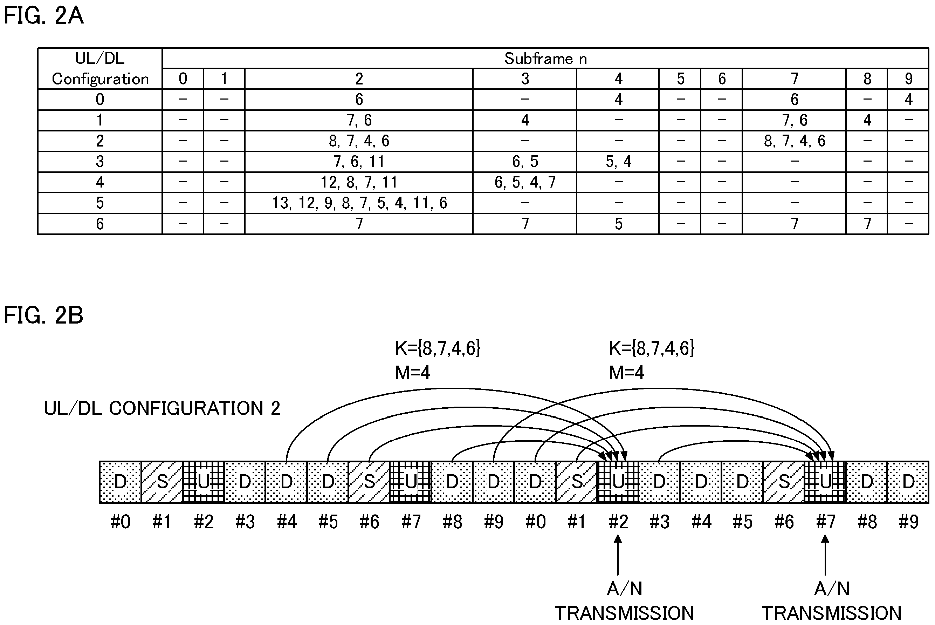

The bundling window refers to the group to which DL subframes (including special subframes) corresponding to A/Ns fed back in a certain UL subframe belong. The bundling window is defined for each UL/DL configuration in TDD (see FIG. 2A). A user terminal communicating using TDD performs control to transmit A/Ns for DL signals transmitted in a predetermined subframe in a predetermined UL subframe based on the bundling window.

For example, if UL/DL configuration 2 is applied, the bundling window (DL subframe) corresponding to UL subframe #2 is composed of DL subframes #4, #5, #8 and special subframe #6 (see FIG. 2B). Also, the bundling window for UL subframe #7 is composed of DL subframes #9, #0, #3 and special subframe #1.

For example, if at least one DL assignment is detected in SF #4 and #5 and #8, the user terminal, in UL subframe #2, feeds back A/Ns for all the CCs configured to the user terminal in the PUCCH. The user terminal transmits the A/N bit sequence based on higher layer signaling, irrespective of the number of CCs to be scheduled and the number of subframes included in the scheduling information.

In this way, when the bit size of A/Ns to be fed back is determined based on information reported by higher layer signaling, the situation might arise where the A/N bit size does not match the number of CCs actually scheduled in the user terminal. Consequently, when A/N feedback of existing systems is used, even when the A/N codebook size to match the CCs that are actually scheduled (CCs where DL signals are transmitted) is different from the codebook size reported by higher layer signaling, the user terminal still cannot change the codebook size.

Also, in TDD, when a UL grant that commands PUSCH transmission is received in subframe n, the user terminal feeds back an A/N in the UL subframe after a predetermined period (for example, (n + k) ms). When A/N transmission is made in the PUSCH, for all configured CCs, the number of A/N subframes specified by the UL DAI included in the PUSCH transmission-commanding UL grant is fed back.

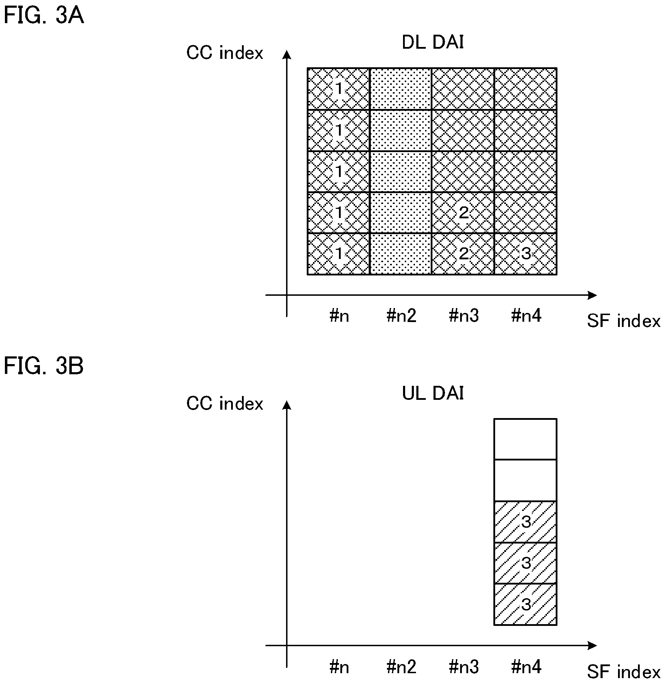

UL DAI (Downlink Assignment Indicator (Index)) is an index indicating the number of subframes in which the DL assignment is transmitted, among the subframes included in the bundling window (the number of subframes in which DL data is scheduled) (see FIG. 3B). In addition, in TDD, DL DAI, indicating the cumulative number of subframes, in which the DL assignment is transmitted, is also defined. DL DAI is included in the DL assignment and reported to the user terminal, and different DL DAIs are configured for each subframe included in the bundling window (for each subframe containing the DL assignment) (see FIG. 3A).

In the case shown in FIG. 3A, among the subframes included in the bundling window, different DL DAIs are configured for SFs #n, #n3 and #4, in which the DL assignment is transmitted. Also, DL DAI can be configured to the same value between different CCs in the same subframe. Note that, SFs #n1 to #n4 included in the bundling window are determined by UL/DL configuration, etc., and, for example, in the bundling window corresponding to UL subframe #2 of UL/DL configuration 2, SFs #n1 to #n4 correspond to SFs #4 to #6 and #8, respectively. In the case shown in FIG. 3B, UL DAI is configured in a UL grant transmitted in a given subframe (for example, SF #n 4).

In existing LTE systems, when the user terminal transmits A/Ns in the PUCCH, the user terminal feeds back A/Ns for all CCs and all subframes in the bundling window irrespective of the value of DL DAI (when space bundling is not used). For example, in FIG. 3A, the user terminal transmits ACKs/NACKs to all the configured CCs #0 to #4 and all SFs #n1 to #n4 in the bundling window.

Also, when the user terminal transmits A/Ns in the PUSCH, the user terminal identifies the subframe containing the DL assignment based on the value of UL DAI and the value of DL DAI, and the user terminal feeds back A/Ns for all the configured CCs in each subframe including the DL assignment (when spatial bundling is not used). For example, in FIG. 3A, the user terminal transmits ACKs/NACKs for all configured CCs #0 to #4 and SFs #n1, #n3 and #n4.

On the other hand, in LTE Rel. 13 and later versions, in order to realize more flexible and faster wireless communication, a study is in progress to reduce the limit on the number of CCs that can be configured in a user terminal and to configure 6 or more CCs (more than five CCs, up to, for example, 32 CCs). When the number of CCs to be configured is expanded, it is possible that the gap between the number of CCs configured and the number of CCs scheduled in each subframe increases. If the number of CCs where DL signals are scheduled is less than the number of CCs to be configured and the codebook size is determined semi-statically as in conventional cases, this leads to the situation where most of the ACKs/NACKs transmitted from the user terminal are NACKs.

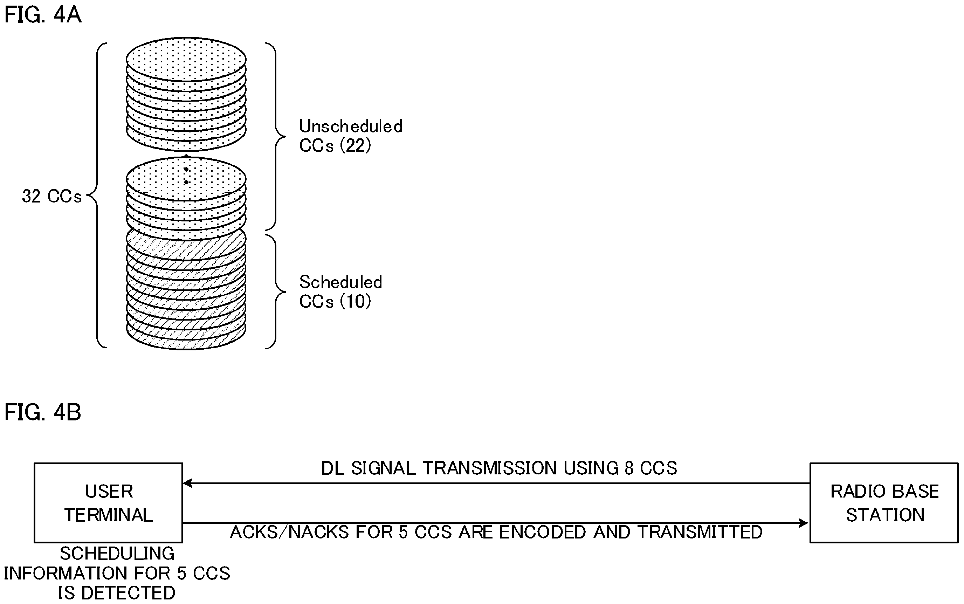

For example, FIG. 4A shows a case where 32 CCs are configured in the user terminal and where the number of CCs actually scheduled is 10. In this case, the number of actually scheduled cells (ten CCs) is smaller than the total number of CCs (32 CCs), and more than half of the CCs are returned NACKs.

In general, the smaller the A/N codebook size, the smaller the amount of information that the user terminal transmits. Therefore, if the A/N codebook size can be reduced, the quality of communication (SINR: Signal to Interference plus Noise Power Ratio) required in radio transmission can be kept low. For example, in CA using five CCs at a maximum, the SINR required in ACK/NACK transmission can be kept low by decreasing the A/N codebook size fed back by the user terminal according to the CCs that are scheduled.

Therefore, it is effective to make it possible to dynamically change the codebook size of A/Ns (HARQ-ACKs) that the user terminal feeds back, according to the number of CCs that are scheduled. In the case where the codebook size of A/Ns to be fed back from the user terminal can be changed dynamically, for example, the user terminal may change the number of ACK/NACK bits dynamically depending on the number of scheduled CCs and so on. As a method of changing the number of A/N bits dynamically like this, for example, the user terminal may determine the number of A/N bits based on the number of downlink signals detected (for example, PDSCH-scheduling PDCCHs/EPDCCHs).

Incidentally, in a PUCCH format (for example, format 3) for use for A/Ns to which CA is applied, the A/N bit sequence is subjected to error correction coding (for example, block coding) and transmitted. Therefore, if the recognition of the codebook size does not match between the user terminal that performs encoding and the radio base station that performs decoding, the radio base station cannot correctly decode the ACKs/NACKs fed back from the user terminal.

For example, when a detection failure or error detection occurs and the number of CCs which the user terminal recognizes is different from the number of CCs actually scheduled, the situation arises where the recognition of the codebook (bit sequence) size does not match between the radio base station and the user terminal (see FIG. 4B). FIG. 4B shows a case where, although the radio base station performs scheduling (DL signal transmission) for the user terminal by using 8 CCs, the user terminal detects only the PDCCHs/EPDCCHs (scheduling information) for five CCs. That is, the user terminal fails to detect the DL signals (for example, PDCCHs/EPDCCHs) of 3 CCs.

Referring to FIG. 4B, if the A/N codebook size is determined based on DL signals (the number of CCs) detected by the user terminal, the user terminal transmits an A/N bit sequence for five CCs detected, to the radio base station. For this reason, the radio base station cannot perform decoding properly, and the entire A/N bit sequence is affected, and the quality of feedback using A/Ns is severely deteriorated.

In this way, when the user terminal fails to detect DL signals transmitted from the radio base station in a predetermined CC, the user terminal determines the number of CCs allocated smaller than the number of CCs in which DL signals are transmitted from the radio base station. Further, when the user terminal makes error detection of DL signals transmitted from the radio base station, the user terminal determines the number of allocated CCs bigger than the number of CCs in which DL signals are transmitted from the radio base station.

Although the method of determining the codebook size of A/Ns to transmit from the user terminal based on the number of PDCCHs/EPDCCHs detected is easy to implement, when detection failures or error detections occur, the recognition of the codebook size does not match between the radio base station and the user terminal. In this case, as described above, the quality of feedback based on A/Ns deteriorates, and the quality of communication may be deteriorated.

Therefore, in order to adaptively control the bit sequence of A/Ns (HARQ-ACK codebook) according to the number of scheduled CCs, it is effective to report to the user terminal the CCs whose A/Ns are to be fed back. Therefore, the present inventors focused attention on a method in which the radio base station reports downlink control information to the user terminal by including in the downlink control information the identifier to indicate the CCs whose A/Ns are to be fed back (or the number of CCs). The identifier to indicate the CCs whose A/Ns are to be fed back is also referred to as the HARQ-ACK codebook indicator (HCI).

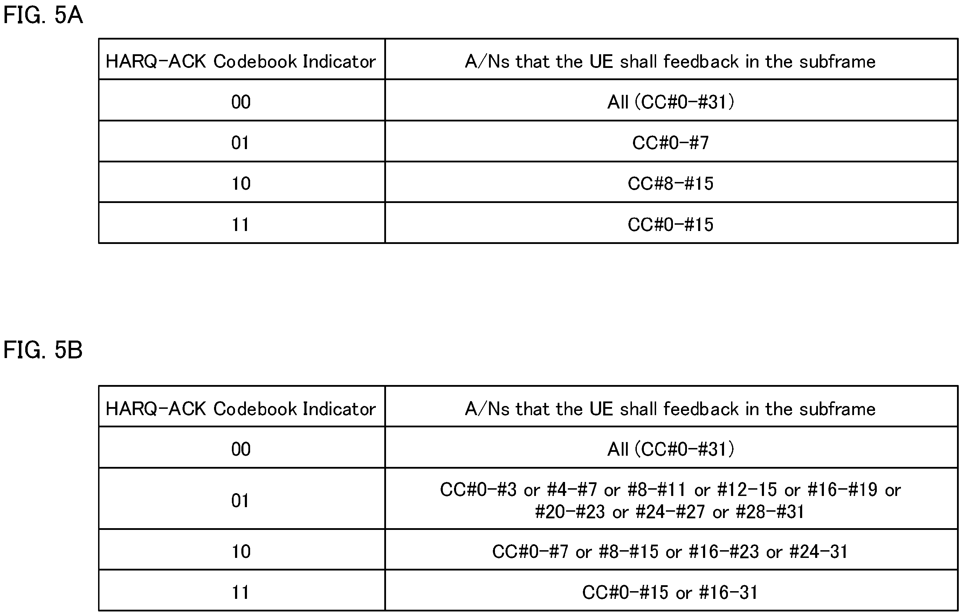

For example, the radio base station configures/pre-defines HARQ-ACK codebook sets in the user terminal in advance by higher layer signaling (for example, RRC signaling). For example, as each HARQ-ACK codebook set, the radio base station configures the combination of CCs whose A/Ns should be to be fed back by the user terminal (see FIG. 5A and FIG. 5B). FIG. 5A and FIG. 5B each show an example of HARQ-ACK codebook set when CCs #0 to #31 are configured in the user terminal.

The radio base station includes an HCI designating which codebook to use, among the codebook sets, in the downlink control information, and transmits the HCI to the user terminal. The user terminal generates and feeds back an A/N bit sequence for the CC designated by the HCI.

The HARQ-ACK codebook set of FIG. 5A can be suitably applied when the user terminal feeds back A/Ns, regardless of whether or not the DL assignment is detected, to the CCs specified by the HCI (method 1). Further, the HARQ-ACK code book set of FIG. 5B can be suitably applied when the user terminal feeds back A/Ns to the CC specified by the HCI taking into consideration the CCs where the DL assignment was detected (method 2).

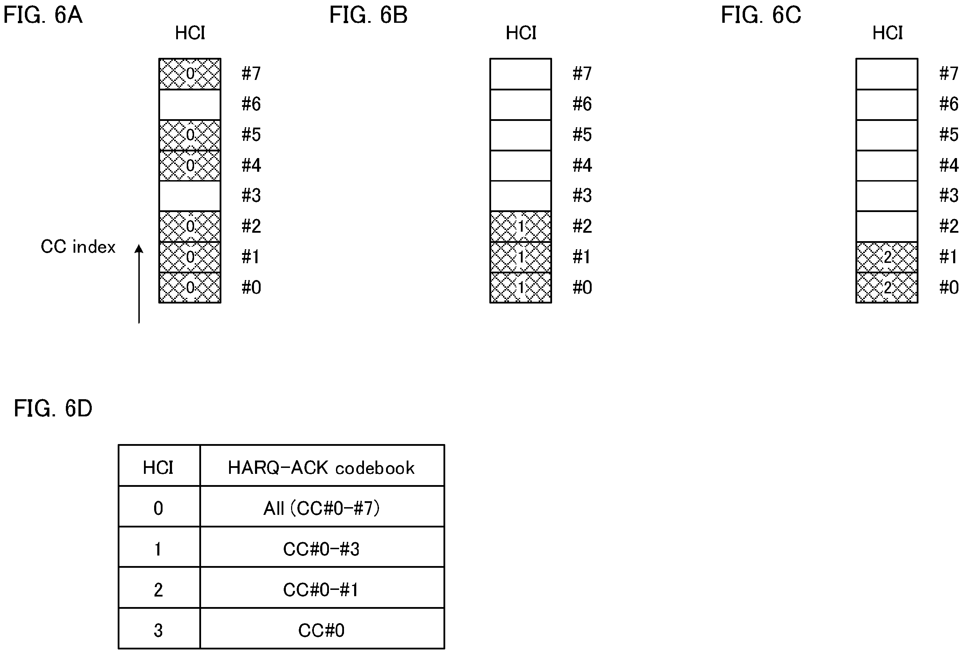

FIG. 6 shows an example of the A/N feedback method for use when the user terminal uses method 1. Here, it is shown that CCs #0 to #7 are configured in the user terminal the user terminal determines CCs whose A/Ns are to be transmitted based on the table (FIG. 6D), in which HARQ-ACK codebook sets are defined.

In FIG. 6A, an HCI (HCI = 0) designating CCs # 0 to # 7 is reported in each CC, so that the user terminal feeds back A/Ns with respect to CCs # 0 to # 7 regardless of the detection of the DL assignment. In FIG. 6B, although the user terminal detects the DL assignment in CCs #0 to #2, since the HCI (HCI = 1) designating CCs #0 to #3 is reported in each CC, the user terminal feeds back A/Ns for CCs #0 to #3 regardless of whether or not DL assignment is detected. In FIG. 6C, since HCI (HCI = 2) designating CCs #0 and #1 is reported in each CC, the user terminal feeds back A/Ns for CCs #0 and #1 regardless of whether or not DL assignment is detected.

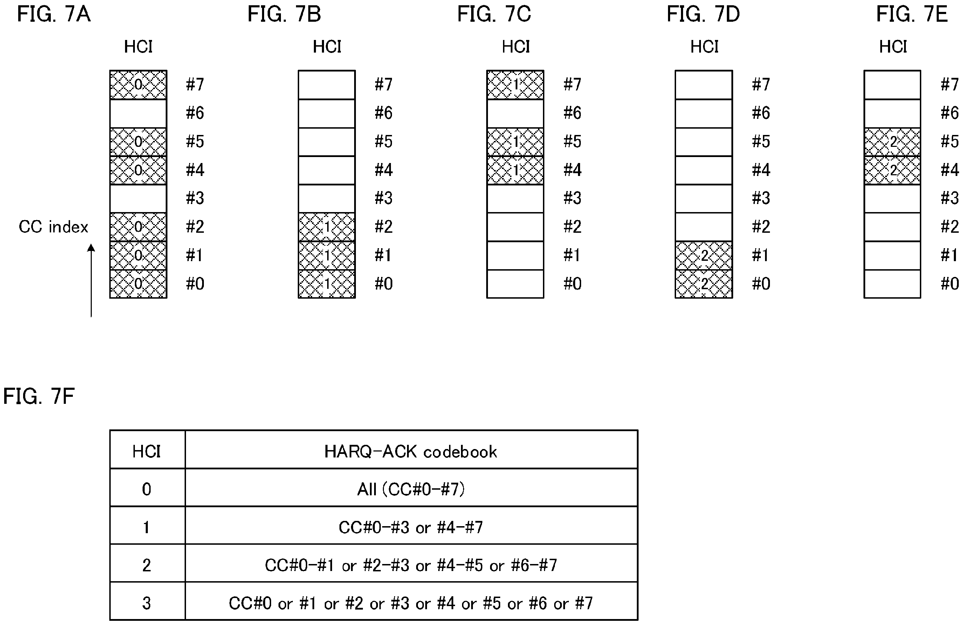

An example of the A/N feedback method when the method 2 is used for the user terminal is shown in FIG. 7. Here, it is shown that CCs #0 to #7 are configured in the user terminal, and the user terminal determines CCs whose A/Ns are to be transmitted based on the table (FIG. 7F) in which HARQ-ACK codebook sets are defined.

In FIG. 7A, an HCI (HCI = 0) designating CCs #0 to #7 are reported in each CC, and the user terminal feeds back A/Ns for CCs #0 to #7. In FIG. 7B, an HCI (HCI = 1) designating CCs #0 to #3 or CCs #4 to #7 is reported in each CC, and the user terminal detects the DL assignment in CCs #0 to #2. Therefore, A/Ns for CCs #0 to #3 are fed back based on the DL assignment detection result at the user terminal. In FIG. 7C, HCI (HCI = 1) designating CCs #0 to #3 or CCs #4 to #7 is reported in each CC, and the user terminals detect DL assignment in CCs #4, #5 and #7. Therefore, A/Ns for CCs #4 to #7 are fed back based on the DL assignment detection result at the user terminal.

In FIG. 7D, an HCI (HCI = 2) designating CCs #0 and #1, #2 and #3, #4 and #5, or #6 and #7 is reported in each CC, and the user terminal detects the DL assignment in CCs #0 and #1. Therefore, the A/Ns for CCs #0 and #1 are fed back based on the DL assignment detection result at the user terminal. In FIG. 7E, an HCI (HCI = 2) designating CCs #0 and #1, #2 and #3, #4 and #5, or #6 and #7 is reported in each CC, and the user terminal detects the DL assignment in CC #4 and #5. Therefore, A/Ns for CC #4 and #5 are fed back based on the DL assignment detection result at the user terminal.

In this way, by using HCIs, it is possible to dynamically control to which CCs A/N feedback should be sent in each DL subframe, and it is possible to match the recognition of the A/N bit sequence size (A/N codebook) between the user terminal and the radio base station.

On the other hand, when HCI is applied to TDD controlling A/N feedback based on bundling windows, how to configure the HCI and/or how the user terminal determines the number of A/N bits (A/N bit sequence size and A/N codebook size) becomes a problem.

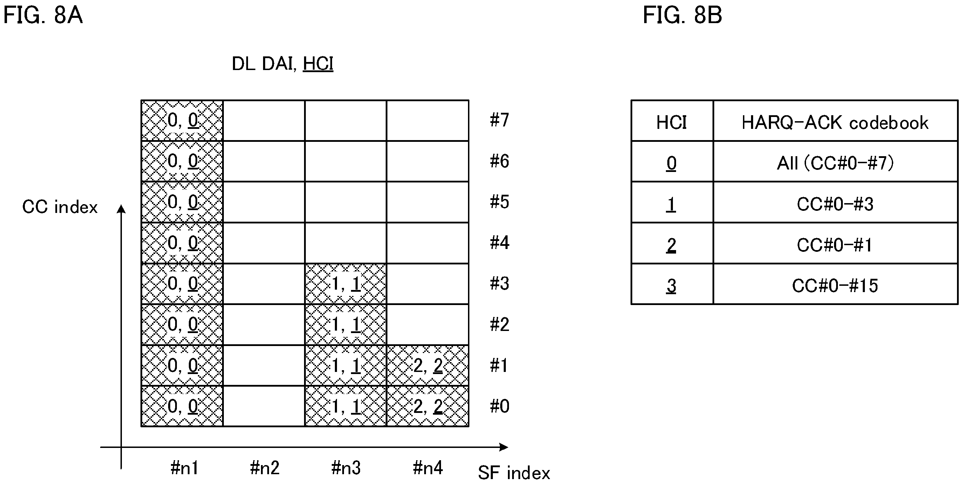

As mentioned above, in TDD, scheduling CCs can change for each subframe within one bundling window. For example, as in the case of FDD, it is assumed that the HCI value is configured for each subframe in the bundling window, and the user terminal transmits A/Ns based on the HCI transmitted in each subframe (see FIG. 8A). FIG. 8A shows an example of a DL assignment (DL DAI, HCI) in a subframe of a bundling window for a user terminal configured with CCs #0 to #7. In addition, FIG. 8B shows an example of a table in which the correspondence relationship between HARQ-ACK codebook sets (CC whose A/N is to be transmitted) and HCIs is defined.

In the case shown in FIG. 8A, within the bundling window, DL signals are scheduled in CCs #0 to #7 in SF #n1, DL signals are scheduled in CC #0 to CC #3 in SF #n3, and DL signals are scheduled in CCs #0 and #1 in SF #n4. Here, as in the case of FDD, it is assumed that the user terminal decides the CCs whose A/Ns are to be transmitted, in each subframe, based on HCI.

In this case, if the user terminal fails to detect the DL assignment in any SF, the user terminal cannot accurately know the number of A/N bits in the SF where detection failed. For example, in FIG. 8A, when the user terminal fails to detect DL assignment in CCs #0 and #1 of SF #n4, the user terminal cannot obtain the DL assignment of SF #n4, and the number of A/N bits transmitted by the user terminal may be different from the number of A/N bits assumed by the radio base station. There is a risk that the recognition of the number of A/N bits may not match between the user terminal and the radio base station.

Therefore, the present inventors came up with an idea to decide the CCs (target CC whose A/N is to be fed back) whose HARQ-ACK is to be transmitted in the bundling window taking HCI transmitted in each subframe included in the bundling window into account. That is, the present inventors have come up with an idea of selecting the CCs whose A/Ns are to be transmitted (the number of A/N bits) taking into consideration all the HCIs transmitted in the bundling window.

For example, the present inventors have found that the CCs whose A/Ns are to be transmitted (the number of A/N bits) can be selected based on the largest HCI among the HCIs transmitted for each SF included in the bundling window, for all SFs in the bundling window. Such a configuration can be suitably applied when method 1 above is used and A/Ns are transmitted in the PUCCH of a given cell (for example, PCell and/or PUCCH SCell). Alternatively, the CCs whose A/Ns are to be transmitted may be determined for all the SFs in the bundling window (the number of A/N bits) based on the HCI of the last scheduled SF among the HCIs transmitted for each SF included in the bundling window.

In addition, the present inventors have found that CCs designated at least once by the HCIs transmitted for each SF included in the bundling window can be selected as CCs whose A/Ns are to be transmitted, for all the SFs in the bundling window, and the number of A / N bits can be determined based on these CCs. Such a configuration can be suitably applied when method 2 above is used and A/N is transmitted in the PUCCH of a given cell (for example, PCell, PUCCH SCell).

Further, the present inventors have found that, based on the largest HCI among the HCIs transmitted for each SF included in the bundling window, it is possible to determine the CC whose A/N is to be transmitted, in the bundling window, and determine SF (or number of SFs) whose A/N is to be transmitted based on UL DAI and/or DL DAI. Such a configuration can be suitably applied to when method 1 above is used and A/N is transmitted on PUSCH.

Based on the HCIs transmitted for each SF included in the bundling window and the detection result at the user terminal, CCs that are designated at least once can be selected as CCs whose A/Ns are to be transmitted in the bundling window, and the SFs (or the number of SFs) whose A/Ns are to be transmitted can be determined based on UL DAI and/or DL DAI. Such a configuration can be suitably applied when method 2 above is used and A/N is transmitted on PUSCH.

Now, embodiments of the present invention will be described below. In the following description, an example is shown in which the number of CCs configured in the user terminal is eight (CCs #0 to #7), but the number of CCs that can be set in the user terminal is not limited to this. Also, an example where four SFs are configured as a bundling window is explained (for example, bundling window corresponding to UL subframe 2 of UL/DL configuration 2), but the present embodiment is not limited to this. The number of SFs included in the bundling window is not limited to four, and the number of SFs can be changed according to the UL/DL configuration.

In addition, although PUCCH format 3 can be used for A/N feedback, this is not limiting. It is equally possible to use a new PUCCH format having larger capacity than PUCCH format 3. Also, the number and arrangement of cells to be scheduled, the indices of cells to be scheduled, and the signals to be transmitted are not limited to those in the following examples.

Further, in the embodiments described below, a method 1 of determining the A/N codebook based on HCI regardless of DL assignment detection and a method 2 of determining the A/N codebook based on HCI and the CCs in which DL assignments are detected are exemplified as A/N feedback methods using HCI in TDD, but these are not limiting. Also, the table of FIG. 6D is used when Method 1 is applied and the case where Method 2 is applied shows the case where the table of FIG. 7F can be used, but applicable tables are not limited to these.

### (First Example)

In the first example, a case where the A/N codebook is determined taking the HCI transmitted in each subframe included in the bundling window into consideration and fed back in the PUCCH of the predetermined cell will be described. In the following description, a method 1 for determining the A/N codebook based on the HCI and a method 2 for determining the A/N codebook based on the HCI and the DL assignment detection CC are explained as an example.

In the following description, the table of FIG. 6D is used when method 1 is used and the table of FIG. 7F is used when method 2 is used, but applicable tables are limited to these. Note that the configuration applied to method 1 and the configuration applied to method 2 can be used in combination.

### <Method 1>

User terminal feeds back A/Ns for the CCs specified by the largest HCI among the HCIs transmitted in the SFs included in the bundling window in SFs. The maximum HCI refers to the HCI which indicates the maximum number of CCs whose A/Ns are to be transmitted, and, in the table of FIG. 6D, the HCI value "0" is the maximum HCI.

The radio base station can include the HCI in the downlink control information and the radio base station can report the downlink control information to the user terminal (for example, DL assignment including DL DAI, etc.). Therefore, among the SFs included in the bundling window, an SF in which an HCI is transmitted can be regarded as an SF in which a DL assignment is transmitted (for example, an SF in which the DL data is scheduled). Also, if DL assignments for multiple CCs are sent in a subframe, the radio base station can set the DL DAI, UL DAI and HCI to a common value among a plurality of CCs, and can transmit these to the user terminal.

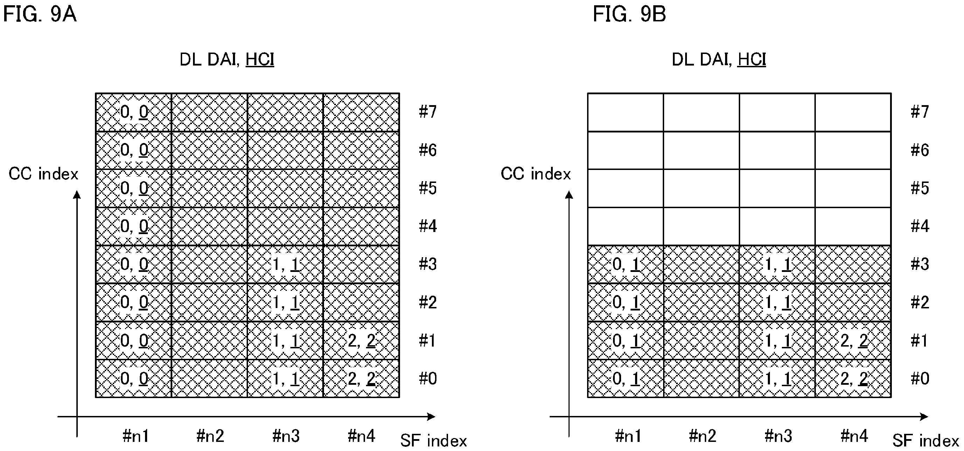

In the case shown in FIG. 9, the CC whose A/N is to be transmitted is determined based on the maximum HCI among the HCIs transmitted for each SF in the bundling window (SF in which DL assignment is sent). In FIG. 9A, among SFs #n1 to #n4 included in the bundling window, in SFs #n1, #n3 and #n4, the DL assignment is transmitted in predetermined CCs. Specifically, DL assignment is transmitted in CCs #0 to #7 in SF #n1, DL assignment is transmitted in CCs #0 to #3 in SF #n3 and DL assignment is transmitted in CCs #0 and #1 in SF #n4.

In this case, in the radio base station, a predetermined DL DAI (= 0) and HCI (= 0) are included in the DL assignment for each CC of SF #n1 and reported to the user terminal. Similarly, at the radio base station, a predetermined DL DAI (= 1) and HCI (= 1) are included in the DL assignment for CCs #0 to #3 of SF #n3, and predetermined DL DAI (= 2) and HCI (= 2) are included in the DL assignments for CCs #0 and #1 of SF #n4, and these are reported to the user terminal.

Based on the maximum HCI (here, HCI = 0 specifying CCs #0 to #7) among the HCIs transmitted in each SFs #n1, #n3, and #n4, the number of CCs whose A/Ns is to be transmitted is determined to be CC #0 to CC #7. Also, in the user terminal, for the determined CCs #0 to #7, A/N bits for all of SFs #n1, #n2, #n and #n4 are generated and fed back (when space bundling is not used).

In the case shown in FIG. 9B, among SFs #n1 to #n4 included in the bundling window, a DL assignment is transmitted in a predetermined CC in SFs #n1, #n3 and #n4. Specifically, DL assignment is transmitted in CCs #0 to #3 in SF #n1, DL assignment is transmitted in CCs #0 to #3 in SF #n3, and DL assignment is transmitted in CCs #0 and #1 in SF #n4.

In this case, in the radio base station, a predetermined DL DAI (= 0) and HCI (= 0) are included in the DL assignment for each of CCs #0 to #3 of SF #n1 and reported to the user terminal. Similarly, at the radio base station, a predetermined DL DAI (= 1) and HCI (= 1) are included in the DL assignment for CCs #0 to #3 of SF #n3 and predetermined DL DAI (= 2) and HCI (= 2) are included in DL assignments for CCs #0 and #1 of SF #n4, and these are reported to the user terminal.

Based on the maximum HCI (in this case, HCI = 1 specifying CCs #0 to #3) among the HCIs transmitted in each SFs #n1, #n3, and #n4, the number of CCs whose A/Ns are to be transmitted is determined to be CC #0 to CC #3. Also, in the user terminal, for the determined CCs #0 to #3, A/N bits transmitted for all SFs #n1 to #n4 are generated and fed back.

As described above, in the case where the CCs (the number of A/N bits) whose A/Ns are to be transmitted is determined in the user terminal based on the maximum HCI specifying the maximum number of CCs, even if detection fails in some SFs and/or CCs, the number of A/N bits can be determined by performing detection in one of the CCs specified by the maximum HCI. In the SF with the largest HCI, there is a high possibility that many CCs will be scheduled and, in this case, it is unlikely that DL assignment detection will fail in all CCs. For this reason, by determining the CCs (the number of A/N bits) whose A/Ns are to be transmitted based on the maximum HCI, it is possible to greatly reduce the probability of occurrence of A/N codebook size recognition mismatch between the user terminal and the radio base station.

### <Resource for ACK/NACK>

When the user terminal feeds back A/Ns using the PUCCH, it may be possible that the user terminal uses the resource specified by the downlink control information. For example, when the user terminal performs PUCCH transmission in a predetermined cell using PUCCH format 3 (or new PUCCH format), the user terminal selects the PUCCH resource based on the ARI value included in the downlink control information.

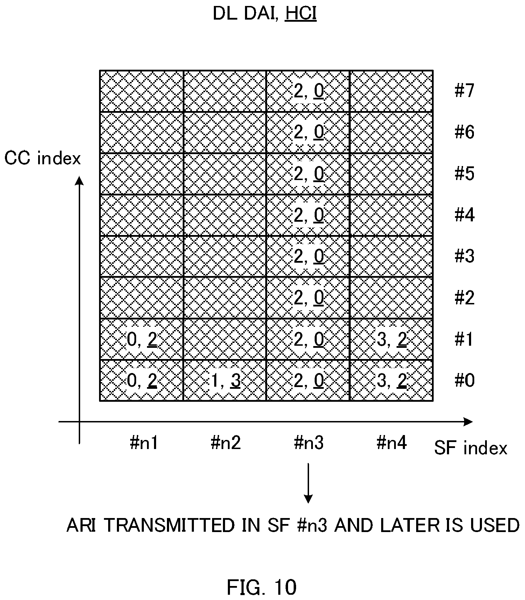

When TDD is used, in the radio base station, it may be possible that the number of CCs in which DL assignments are transmitted increases from the middle of the SFs included in the bundling window (see FIG. 10). In FIG. 10, among the SFs included in the bundling window, DL assignments are transmitted in CCs #0 and #1 of SF #n1, CC #0 of SF #n2, CCs #0 to #7 of SF #n3 and CCs #0 and #1 of SF #n4 .

The radio base station reports the DL assignment to the user terminal including the predetermined DL DAI (= 0) and HCI (= 2) in the DL assignment for each CC of SF #n. Similarly, at the radio base station, a predetermined DL DAI (= 1) and HCI (= 3) are included in the DL assignment for CC #0 of SF #n2, predetermined DL DAI (= 2) and HCI (= 0) are included in the DL assignment for CCs #0 to #7 of SF #n3, predetermined DL DAI (= 3) and HCI (= 2) are included in the DL assignment for CCs #0 and #1 of SF #n4, and these DL assignments are reported to the user terminal.

That is, although the scheduler (radio base station) decreases the number of allocated CCs in a relatively early SF in the bundling window and the user terminal is commanded to send PUCCH feedback using a PUCCH format with a small payload (for example, PF 3), due to changes in the communication environment such as traffic, the number of allocated CCs may increase from the middle of SFs.

Therefore, in the present embodiment, the PUCCH resource can be determined based on the ARI value included in the downlink control information transmitted in the SF whose HCI indicates the maximum value (SF #n3 in FIG. 10). If there are multiple SFs in which HCI shows the maximum value, the PUCCH resource can be determined based on the ARI value specified in one SF (for example, the latter half SF).

With this, PUCCH resource that is configured taking into account the maximum HCI (the maximum number of CCs) can be used to determine the number of A/N bits. As a result, even when the number of allocated CCs increases from the middle of SFs in the bundling window, ACK/NACK transmission (PUCCH format selection, PUCCH resource selection, etc.) can be made properly.

Note that the present embodiment is not limited to this, and it is also possible to use ARI transmitted in SFs after the SF whose HCI shows the maximum value. In SFs where the HCI shows the maximum value, it is considered that the base station has determined the PUCCH format to use for transmission in the user terminal. Therefore, when the PUCCH resource is selected using the ARI transmitted in subsequent SFs, it is possible to obtain the same effect as when selecting PUCCH resource using the ARI of the SF in which HCI shows the maximum value.

### <Method 2>

The user terminal can feed back in the PUCCH the A/Ns for all SFs for CCs specified even once by the HCIs transmitted in the SFs included in the bundling window.

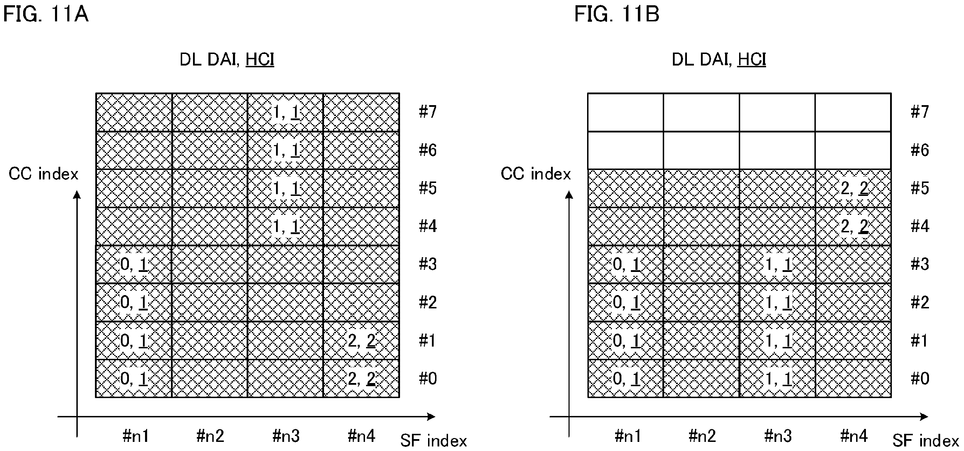

FIG. 11 shows an example of the case where A/N transmission is made for CCs that are specified even once by the HCIs transmitted in each SF included in the bundling window (in SF where DL assignment is transmitted). In the case shown in FIG. 11A, among SFs #n1 to #4 of the bundling window, In SFs #n1, #n3 and #n4, the DL assignment is transmitted in a predetermined CC. Specifically, DL assignments are transmitted in CCs #0 to #3 of SF #n1, CCs #4 to #7 of SF #n3 and CCs #0 and #1 of SF #n4.

In this case, at the radio base station, a predetermined DL DAI (= 0) and HCI (= 1) are included in the DL assignment for CCs #0 to #3 of SF #n1 and reported to the user terminal. Similarly, at the radio base station, a predetermined DL DAI (= 1) and HCI (= 1) are included in the DL assignment for CCs #4 to #7 of SF #n3 and a predetermined DL DAI (= 2) and HCI (= 2) are included in the DL assignment for CCs #0 and #1 of SF #n4, and these are then reported to the user terminal.

The user terminal controls A/N feedback for CCs that are specified even once by the HCIs transmitted in each SF #n1, #n3, and #n4. Here, based on the HCIs received in SFs #n1, #n3 and #n4 in the bundling window and the result of DL assignment detection in the user terminal, it can be determined that CC #0 to CC #7 are designated at least once. For this reason, the user terminal generates A/N bits for all SFs #n1 to #n4 for CC #0 to CC #7 and feeds back the A/N bits (when spatial bundling is not applied).

In the case shown in FIG. 11B, among SFs #n1 to #n4 included in the bundling window, DL assignment is transmitted in CCs #0 to #3 of SF #n1, CCs #0 to #3 of SF #n3 and CC #4 and #5 of SF #n4.

In this case, in the radio base station, a predetermined DL DAI (= 0) and HCI (= 1) are included in the DL assignment for CCs #0 to #3 of SF #n1 and reported to the user terminal. Similarly, at the radio base station, a predetermined DL DAI (= 1) and HCI (= 1) are included in the DL assignment for CCs #0 to #3 of SF #n3, and predetermined DL DAI (= 2) and HCI (= 2) are included in the DL assignment for CC #4 and #5 of SF #n4, and these are reported to the user terminal.

The user terminal determines that a CC designated even once is a CC whose A/N is to be fed back based on the HCIs transmitted in SFs #n1, #n3 and #n4 and the detection result. Here, based on the HCIs received in SFs #n1, #n3 and #n4 of bundling window and the detection result of DL assignment, the user terminal can determine that CC #0 to CC #5 have been designated at least once. Therefore, the user terminal generates A/N bit sequences for all SF #n to #n+3 for CC #0 to CC #5 and feeds back the A/N bits. If HCI indicates multiple CCs alternatively, CC can be selected based on the detection result at the user terminal.

in this way, by determining the CCs (the number of A/N bits) whose A/Ns are to be fed back to be subjected to A/N feedback taking into consideration the HCI transmitted in each SF of the bundling window, it is possible to appropriately match the recognition of the A/N codebook size between the user terminal and the radio base station.

### (Second Example)

When PUSCH transmission is scheduled by the UL grant in the timing (UL subframe) at which an A/N bit for the bundling window is transmitted, the A/N bit is multiplexed and transmitted in the PUSCH (piggyback). If simultaneous PUCCH-PUSCH transmission is configured, the A/N bit can be transmitted using the PUCCH without being multiplexed in the PUSCH.

When multiplexing A/N bits on the PUSCH, if A/Ns bit for all SFs/all CCs in the bundling window are transmitted, the overhead of the PUSCH will be large. In this case, the coding rate of UL-SCH will be high and the UL throughput will be degraded. Therefore, when transmitting A/N on PUSCH it is necessary to reduce the overhead of A/N bits.

Therefore, in the case shown in the second example, the CCs and SFs whose A/Ns are to be transmitted (the number of A/N bits) are selected in consideration of the HCIs transmitted for each SF included in the bundling window and transmitted by the PUSCH. In the following description, the method 1 for determining the A/N codebook based on HCIs and the method 2 for determining the A/N codebook based on HCI and CCS where DL assignment is detected will be described as examples.

Also, an example to use the table of FIG. 6D when method 1 is used and use the table of FIG. 7 when method 2 is used will be described, but the applicable tables are not limited to these. Note that the configuration applied to method 1 and the configuration applied to method 2 can be used in combination.

### <Method 1>

The user terminal determines the CCs and SFs whose A/Ns are to be transmitted (the number of A/N bits) based on DAIs (UL DAI and/or DL DAI) and HCIs transmitted in predetermined SFs in the bundling window.

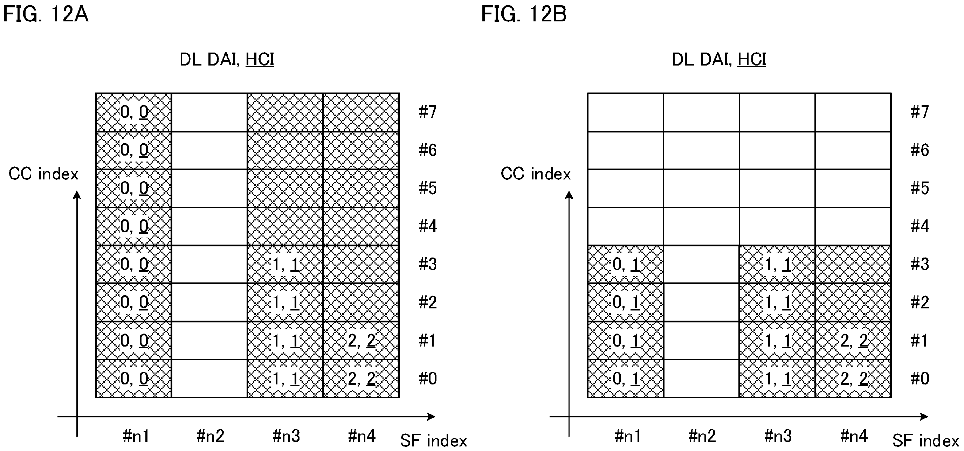

In FIG. 12, an example of a case is shown where the CCs whose A/Ns are to be transmitted are determined based on the maximum HCI among the HCIs transmitted for each SF included in the bundling window (for each SF in which DL assignment is transmitted).

In the case shown in FIG. 12A, among the SFs included in the bundling window, DL assignment is transmitted in CCs #0 to #7 in SF #n1, CCs #0 to #3 in SF #n3 and CCs #0 and #1 in SF #4.

In this case, predetermined DL-DAI (= 0) and HCI (= 0) are included in the DL assignment for the CC of SF #n1 in the radio base station and reported to the user terminal. Similarly, at the radio base station, predetermined DL-DAI (= 1) and HCI (= 1) are included in the DL assignments for CC #0 to #3 of SF #n3, and predetermined DL-DAI (= 2) and HCI (= 2) are included in the DL assignments for CC #0 and #1 of SF #n4, and these are reported to the user terminal.

Also, in a predetermined SF (for example, SF #n4), the radio base station includes UL DAI (here, UL DAI = 3) in the downlink control information (for example, UL grant) and transmits the downlink control information to the user terminal Report it. The radio base station can use the UL DAI and the DL DAI in the same way as in existing systems and designate the CCs whose A/Ns are to be fed back in each SF by using HCI.

Based on the maximum HCI (here, HCI = 0 designating CCs #0 to #7) among the HCIs transmitted in the SFs #n1, #n3 and #n4 in the user terminal, the number of CCs whose A/Ns are to be transmitted is decided as CC #0 to CC #7. In addition, the user terminal can know the number of SFs in which DL data is transmitted based on the UL DAI. In addition, the user terminal can determine in which SF there is no assignment (or in which SF detection failed) based on the DL DAI.

Therefore, the user terminal can determines the A/N codebook size based on the number of CCs determined by the HCI and the number of SFs determined by the UL DAI, and also generate the A/N for the SF identified by the DL DAI. As shown in FIG. 12A, the user terminal generates A/N bits for SFs #n1, #n3 and #n4 for CCs #0 to #7 and feeds back the A/N bits.

In the case shown in FIG. 12B, among the SFs included in the bundling window, DL assignment is transmitted in CCs #0 to #3 in subframe SF #n1, CCs #0 to #3 in SF #n3 and CCs #0 and #1 in SF #n4.

In this case, at the radio base station, a predetermined DL DAI (= 0) and HCI (= 1) are included in the DL assignment for CCs #0 to #3 of SF #n1 and reported to the user terminal. Similarly, at the radio base station, predetermined DL DAI (= 1) and HCI (= 1) are included in the DL assignments for CCs #0 to #3 of SF #n3, and predetermined DL DAI (= 2) and HCI (= 2) are included in the DL assignment for CCs #0 and #1 of SF #n4, and these are reported to the user terminal. Further, in SF #n4, the radio base station includes UL DAI (here, UL DAI = 3) in the downlink control information (for example, UL grant) and reports the downlink control information to the user terminal.

In the user terminal, based on the largest HCI (here, HCI = 1 designating CCs #0 to #3) among the HCIs transmitted in each of SFs #n1, #n3 and #n4, the number of CCs whose A/Ns are to be transmitted is decided as CC #0 to CC #3. In addition, the user terminal can know the number of SFs (here, 3) in which the DL data is transmitted based on the UL DAI. Further, the user terminal can determine in which SF there is no assignment based on the DL DAI (here, SF #n2)

In the case shown in FIG. 12B, the user terminal generates A/N bits for SFs #n1, #n3 and #n4 for CCs #0 to #3 and feeds back these A/N bits. By determining the number of A/N bits based on HCI and UL DAI and/or DL DAI in this manner, it is possible to suppress an increase in overhead of PUSCH.

### <Method 2>

The user terminal can determine the number of HARQ-ACK bits based on DAIs (UL DAI and/or DL DAI) transmitted in the SFs included in the bundling window, HCIs and the detection of CC scheduled by DL assignments.

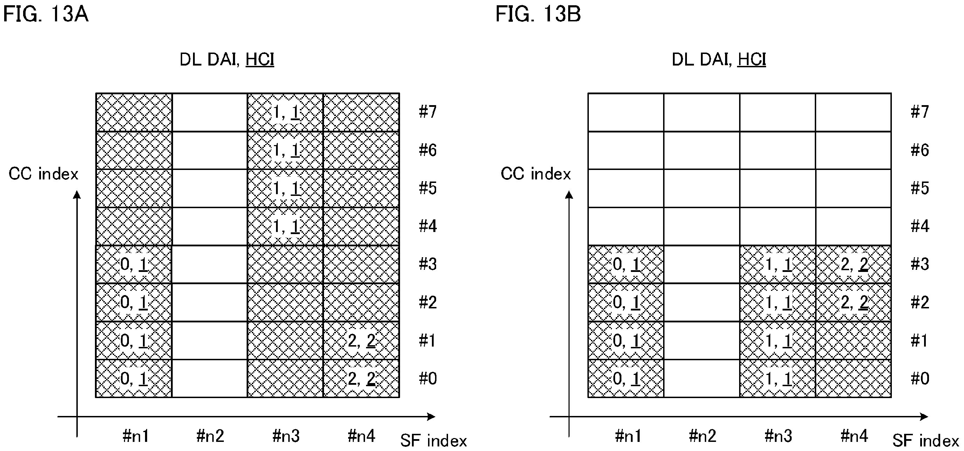

FIG. 13 shows examples of HCI and DL DAI transmitted for each SF included in the bundling window (for each SF in which DL assignment is transmitted).

In the case shown in FIG. 13A, among the SFs included in the bundling window, DL assignment is transmitted in CCs #0 to #3 in SF #n1, DL assignment is transmitted in CCs #4 to #7 in SF #n3, and DL assignment is transmitted in CCs #0 and #1 in SF #n4.

In this case, the radio base station includes a predetermined DL DAI (= 0) and HCI (= 1) in the DL assignment for CCs #0 to #3 of SF #n1 and reports it to the user terminal. Similarly, at the radio base station, predetermined DL DAI (= 1) and HCI (= 1) are included in the DL assignment for CCs #4 to #7 of SF #n3, and predetermined DL DAI (= 2) and HCI (= 2) are included in the DL assignment for CCs #0 and #1 of SF #n4, and these are reported to the user terminal.

Further, the radio base station includes the UL DAI (here, UL DAI = 3) in the downlink control information (for example, UL grant) in the predetermined SF (for example, SF #4) and reports this downlink control information to the user terminal. The radio base station can uses the UL DAI and the DL DAI in the same way as in the existing system and designate the target CCs whose A/Ns are to be transmitted in each SF by using HCI.

Based on the HCIs transmitted in SFs #n1, #n3 and #n4 and the detection of DL assignments, the user terminal determines CC designated even once even as target CCs whose A/Ns are to be fed back. The user terminal can determine, in SF #n1, that the HCI indicates CCs #0 to #3 based on the value of the HCI (HCI = 1) and the CCs (CCs #0 to #3) where DL assignment was detected. In addition, the user terminal can determine, in SF #n3, that the HCI indicates CCs #4 to #7 based on the value of HCI (HCI = 1) and the CCs (CCs #4 to #7) where DL assignment was detected.

In FIG. 13A, CC #0 to CC #7 are designated at least once by HCI received in SFs #n1, #n3 and #n4 in the bundling window. Therefore, the user terminal determines the number of target CCs whose A/Ns are to be transmitted as CC #0 to CC #7. In addition, the user terminal can know the number of SFs in which DL data is transmitted based on the UL DAI. Also, based on the DL DAI, the user terminal can determine which SF has no assignment (or which SF failed detection).

In the case shown in FIG. 13A, the user terminal generates A/N bits for SFs #n1, #n3 and #n4 for CCs #0 to #7 and feeds back the A/N bits.

In the case shown in FIG. 13B, in the SF #n1, #n3, and #n4 among the SF #n to #n4 included in the bundling window, the DL assignment is transmitted in a predetermined CC. In particular, the DL assignment is transmitted in CCs #0 to #3 in SF #n, CCs #0 to #3 in SF #n3 and CC #2 and #3 in SF #n4.

In this case, in the radio base station, predetermined DL DAI (= 0) and HCI (= 1) are included in the DL assignment for CCs #0 to #3 of SF #n1 and reported to the user terminal. Similarly, in the radio base station, predetermined DL DAI (= 1) and HCI (= 1) are included in the DL assignment for CCs #0 to #3 of SF #n3, and predetermined DL DAI (= 2) and HCI (= 2) are included in the DL assignment for CC #2 and #3 of SF #n4, and these are reported to the user terminal.

Further, the radio base station includes UL DAI (here, UL DAI = 3) in the downlink control information (for example, UL grant) in a predetermined SF (for example SF #n4) and transmits the downlink control information to the user terminal. The radio base station can uses the UL DAI and the DL DAI in the same manner as in the existing system and designate the target CCs whose A/Ns are to be fed back in each SF by using HCI.

The user terminal determines the CC specified even once even by the HCI transmitted in SF #n1, #n3, and #n4 as CC whose A/N feedback is to be transmitted to be subjected to A/N feedback transmission. In the case shown here, CC #0 to CC #3 are specified at least once by the HCIs received in SFs #n1, #n3 and #n4 in the bundling window and the detection result by the user terminal. Therefore, the user terminal determines that CC #0 to CC #3 is a target CC whose A/N is to be transmitted. In addition, the user terminal can know the number of SFs in which DL data is transmitted based on the UL DAI. In addition, based on the DL DAI, the user terminal can determine in which SF there is no assignment (or which detection failed in which SF).

In FIG. 13B, the user terminal generates A/N bits in subframes SFs #n1, #n3 and #n4 for CCs #0 to #3 and feeds back the A/N bits.

In this manner, the user terminal determines the CCs and the SFs whose A/Ns are to be transmitted to be subjected to A/N transmission using UL DAIs, DL DAIs and HCIs, and generates A/N bits, so that the A/N payload (overhead) when A/Ns are transmitted in the PUSCH can be reduced. Further, the user terminal determines the CCs and the SFs whose A/Ns are to be transmitted by using UL DAIs, DL DAIs and HCIs and generate A/N bits, so that it is possible to match the recognition of the A/N codebook size between the user terminal and the radio base station.

### (Radio Communication System)

Now, the structure of the radio communication system according to an embodiment of the present invention will be described below. In this radio communication system, the radio communication methods of the above-described embodiments are employed. Note that the radio communication methods of the above-described embodiments may be applied individually or may be applied in combination.

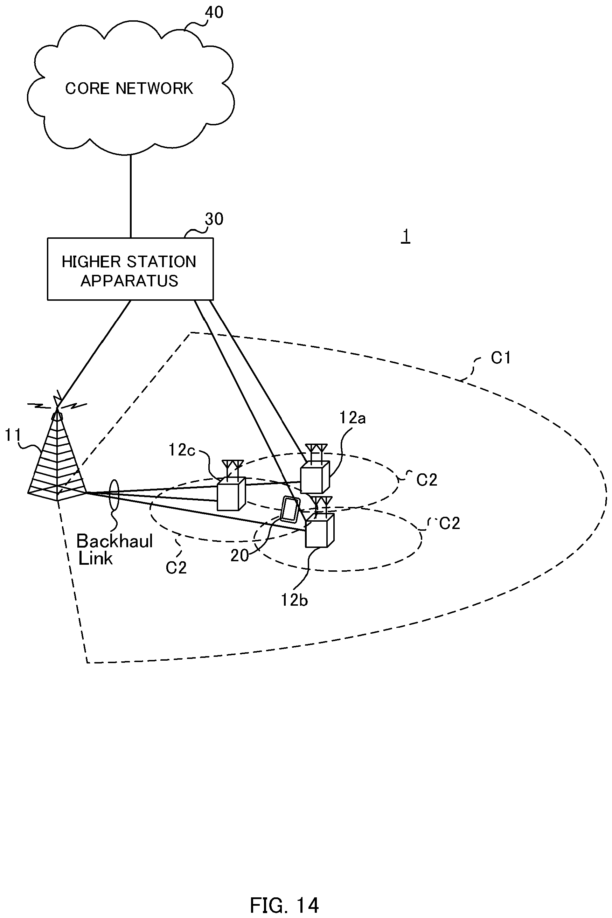

FIG. 14 is a diagram to show an example of a schematic structure of a radio communication system according to an embodiment of the present invention. The radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 shown in FIG. 14 includes a radio base station 11 that forms a macro cell C1, and radio base stations 12a and 12b that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the configuration of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to these combinations, and OFDMA may be used in the uplink.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Blocks) is communicated in the PBCH.

The downlink L1/L2 control channels include downlink control channels (the PDCCH (Physical Downlink Control CHannel) and/or the EPDCCH (Enhanced Physical Downlink Control Channel)), the PCFICH (Physical Control Format Indicator CHannel), the PHICH (Physical Hybrid-ARQ Indicator CHannel) and so on. Downlink control information (DCI) including PDSCH and PUSCH scheduling information is communicated by the PDCCH. The number of OFDM symbols for use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Uplink control information (UCI: Uplink Control Information), including at least one of delivery acknowledgment information (ACK/NACK) and radio quality information (CQI), is transmitted by the PUSCH or the PUCCH. By means of the PRACH, random access preambles for establishing connections with cells are communicated.

### <Radio base station>

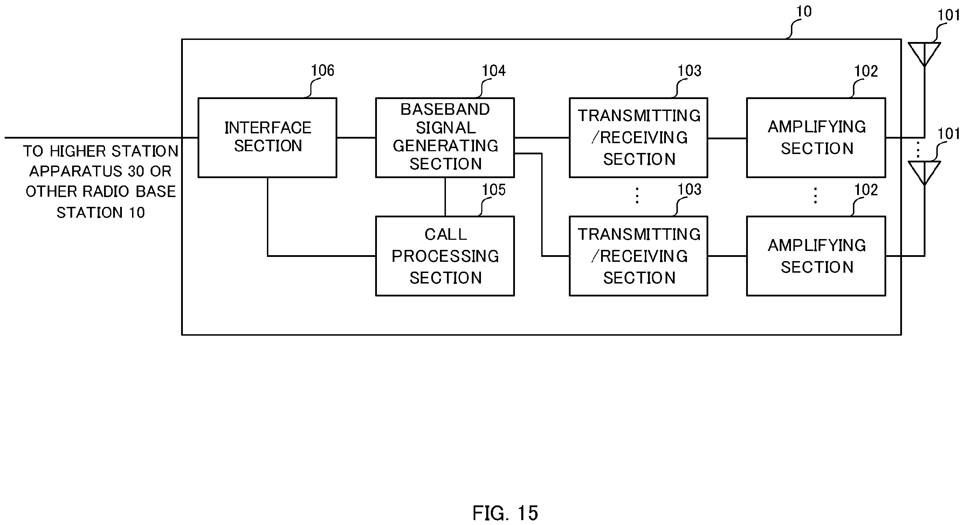

FIG. 15 is a diagram to show an example of an overall structure of a radio base station according to an embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving section (transmission section) 103 can perform DL transmission from each cell by applying TDD and transmit the HARQ-ACK codebook indicator (HCI) in each subframe where there is DL assignment in the bundling window. The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with other radio base stations 10 via an inter-base station interface (for example, an interface in compliance with the CPRI (Common Public Radio Interface), such as optical fiber, the X2 interface, etc.).

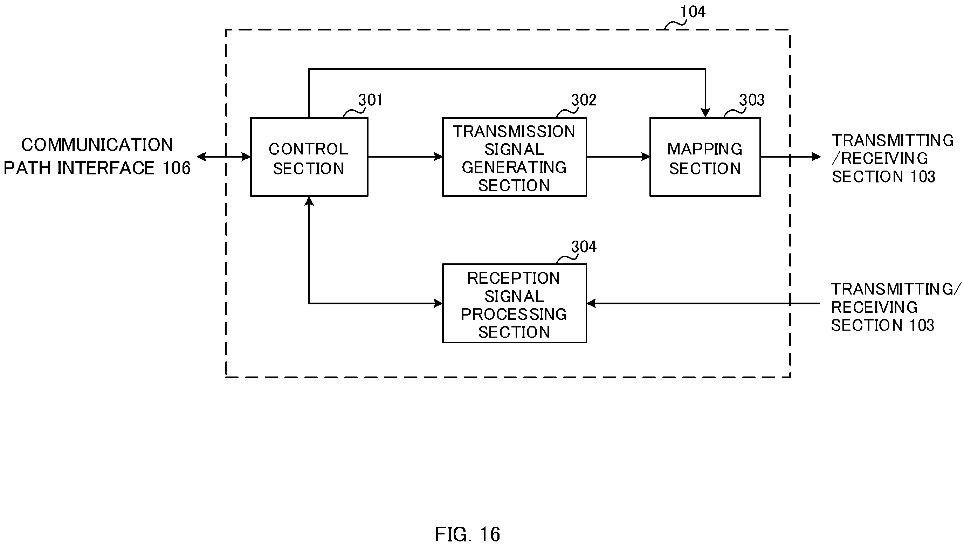

FIG. 16 is a diagram to show an example of a functional structure of a radio base station according to the present embodiment. Note that, although FIG. 10 primarily shows functional blocks that pertain to characteristic parts of the present embodiment, the radio base station 10 has other functional blocks that are necessary for radio communication as well. As shown in FIG. 16, the baseband signal processing section 104 has a control section (scheduler) 301, a transmission signal generation section (generating section) 302, a mapping section 303 and a received signal processing section 304.

The control section (scheduler) 301 controls the scheduling (for example, resource allocation) of downlink data signals that are transmitted in the PDSCH and downlink control signals that are communicated in the PDCCH and/or the EPDCCH. Also, the control section 301 controls the scheduling of system information, synchronization signals, paging information, CRSs (Cell-specific Reference Signals), CSI-RSs (Channel State Information Reference Signals) and so on. Furthermore, the control section 301 also controls the scheduling of uplink reference signals, uplink data signals that are transmitted in the PUSCH, and uplink control signals that are transmitted in the PUCCH and/or the PUSCH.

The control section 301 controls the retransmission of downlink data/new data transmission based on delivery acknowledgment signals (HARQ-ACKs) fed back from the user terminals. Further, the control section 301 controls reception processing of HARQ-ACK fed back from the user terminal based on the bundling window in response to DL transmission. Note that the reception processing may be performed in the received signal processing section 304 based on commands from the control section 301.

For example, the control section 301 can determine the number of HARQ-ACK bits fed back from the user terminal based on the HCI (for example, based on the maximum HCI transmitted in the subframe in the bundling window CC or CCs designated at least once by HCI). Note that, for the control section 301, a controller, a control circuit or a control device that can be described based on common understanding of the technical field to which the present invention pertains can be used.

The transmission signal generation section 302 generates DL signals (downlink control signals, downlink data signals, downlink reference signals and so on) based on commands from the control section 301, and outputs these signals to the mapping section 303. To be more specific, the transmission signal generation section 302 generates a downlink data signal (PDSCH) including user data, and outputs it to the mapping section 303. Further, the transmission signal generation section 302 generates a downlink control signal (PDCCH/EPDCCH) including DCI (UL grant), and outputs it to the mapping section 303. Further, the transmission signal generation section 302 generates downlink reference signals such as CRS and CSI-RS, and outputs them to the mapping section 303.

For the transmission signal generation section 302, a signal generator, a signal generating circuit or a signal generating device that can be described based on common understanding of the technical field to which the present invention pertains can be used.

The mapping section 303 maps the downlink signals generated in the transmission signal generation section 302 to predetermined radio resources based on commands from the control section 301, and outputs these to the transmitting/receiving sections 103. For the mapping section 303, mapper, a mapping circuit or a mapping device that can be described based on common understanding of the technical field to which the present invention pertains can be used.

The received signal processing section 304 performs the reception process (for example, demapping, demodulation, decoding, etc.) of the UL signals (HARQ-ACK, PUSCH, etc.) transmitted from the user terminal 20. The processing results are output to the control section 301. The receiving process section 304 can be constituted by a signal processor, a signal processing circuit or a signal processing device, and a measurer, a measurement circuit or a measurement device that can be described based on common understanding of the technical field to which the present invention pertains.

### <User terminal>

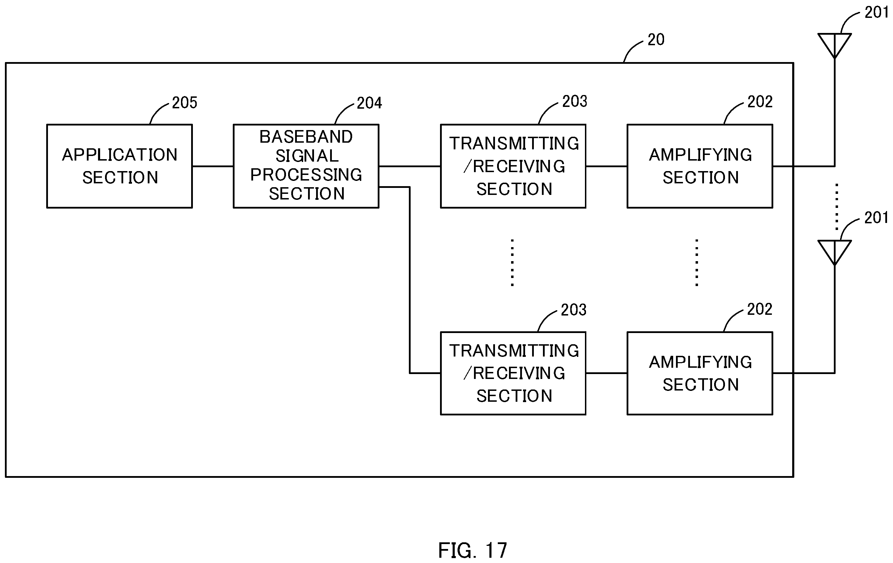

FIG. 17 is a diagram to show an example of an overall structure of a user terminal according to an embodiment of the present invention. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be comprised of transmitting sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signal is subjected to frequency conversion and converted into the baseband signal in the transmitting/receiving sections 203, and output to the baseband signal processing section 204.

The transmitting/receiving section (receiving section) 203 receives the DL signal transmitted from a plurality of cells using TDD. For example, the transmission/receiving section (receiving section) 203 receives the HARQ-ACK codebook indicator (HCI) transmitted in each subframe in the bundling window. Further, the transmission/receiving section (transmission section) 203 transmits the HARQ-ACK for the received DL signal. Note that, for the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency bandwidth in the transmitting/receiving sections 203. The radio frequency signals that are subjected to frequency conversion in the transmitting/receiving sections 203 are amplified in the amplifying sections 202, and transmitted from the transmitting/receiving antennas 201.

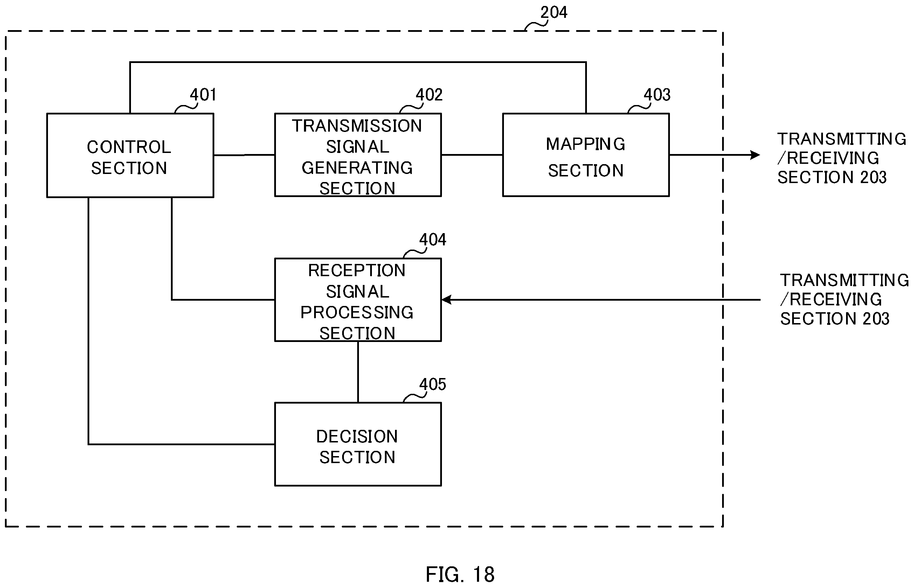

FIG. 18 is a diagram to show an example of a functional structure of a user terminal according to the present embodiment. Note that, although FIG. 18 primarily shows functional blocks that pertain to characteristic parts of the present embodiment, the user terminal 20 has other functional blocks that are necessary for radio communication as well. As shown in FIG. 18, the baseband signal processing section 204 provided in the user terminal 20 has a control section 401, a transmission signal generation section 402, a mapping section 403, a received signal processing section 404 and a decision section 405.

The control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not re transmission control is necessary for the downlink data signals, and so on. To be more specific, the control section 401 can control the transmission signal generation section 402, the mapping section 403 and the received signal processing section 404.

Based on the HARQ-ACK codebook indicator (HCI) transmitted per subframe in the bundling window, the control section 401 decides a cell for transmitting the HARQ-ACK to the bundling window. For example, the control section 401 determines the cell (the number of HARQ-ACK bits) to be subjected to the HARQ-ACK transmission based on the maximum HCI among the HCIs transmitted in each subframe in the bundling window. Further, based on the ARI (Ack/Nack Resource Indicator) transmitted in the subframe in which the maximum HCI is transmitted, the control section 401 can determine the resource for transmitting the HARQ-ACK. Alternatively, based on the HCI of the last scheduled SF among the HCIs transmitted for each SF included in the bundling window, the control section 401 may determine the CCs (the number of A/N bits) whose A/Ns are to be transmitted, with respect to all the SFs in the bundling window.

Further, the control section 401 can perform control so that the HARQ-ACK is transmitted to cells specified at least once by the HCIs transmitted in each subframe in the bundling window. Further, the control section 401 can transmit HARQ-ACKs in all subframes in the bundling window on the uplink control channel.

Also, when UL grants are transmitted in a predetermined subframe within the bundling window, the control section 401 can determine the number of HARQ-ACK bits based on DL DAIs transmitted per subframe, HCIs and UL DAIs transmitted in predetermined subframes, and transmit the A/N bits in the uplink shared channel. For example, the control section 401 can determine a cell to be subjected to HARQ-ACK transmission based on the maximum HCI among the HCIs transmitted in each subframe in the bundling window, and determine subframes for transmitting the HARQ-ACK based on the UL DAI and/or the DL DAI.

Further, the control section 401 can perform control so that the HARQ-ACK is transmitted to cells specified at least once by the HCIs transmitted in each subframe in the bundling window. Note that, for the control section 401, a controller, a control circuit or a control device that can be described based on common understanding of the technical field to which the present invention pertains can be used.

The transmission signal generation section 402 generates UL signals based on commands from the control section 401, and outputs these signals to the mapping section 403. For example, the transmission signal generation section 402 generates uplink control signals such as delivery acknowledgement signals (HARQ-ACKs), channel state information (CSI) and so on, based on commands from the control section 401.

Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal. For the transmission signal generation section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generation section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs receiving processes (for example, demapping, demodulation, decoding and so on) of DL signals (for example, downlink control signals transmitted from the radio base station, downlink data signals transmitted in the PDSCH, and so on). The received signal processing section 404 outputs the information received from the radio base station 10, to the control section 401 and the decision section 405. The received signal processing section 404 outputs, for example, broadcast information, system information, RRC signaling, DCI and so on, to the control section 401.

The received signal processing section 404 can be constituted by a signal processor, a signal processing circuit or a signal processing device, and a measurer, a measurement circuit or a measurement device that can be described based on common understanding of the technical field to which the present invention pertains. Also, the received signal processing section 404 can constitute the receiving section according to the present invention.

The decision section 405 makes retransmission control decisions (ACKs/NACKs) based on the decoding results in the receiving process section 404, and, furthermore, outputs the results to the control section 401. When downlink signals (PDSCH) are transmitted from multiple CCs (for example, six or more CCs), retransmission control decisions (ACKs/NACKs) are made on a per CC basis, and output to the control section 401. For the decision section 405, a decision maker, a decision making circuit or a decision making device that can be described based on common understanding of the technical field to which the present invention pertains can be used.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of the radio base station 10 and the user terminal 20 may be implemented by using hardware such as an ASIC (Application-Specific Integrated Circuit), a PLD (Programmable Logic Device), an FPGA (Field Programmable Gate Array) and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM (Read Only Memory), an EPROM (Erasable Programmable ROM), a CD-ROM (Compact Disc-ROM), a RAM (Random Access Memory), a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The examples/embodiments illustrated in this description may be used individually or in combinations, and may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (the MIB (Master Information Block) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the appended claims.

## Claims

1. A user terminal (20) using TDD in a 3GPP system comprising:
a receiving section (203) that receives DL signals transmitted from a plurality of cells in a bundling window, wherein the bundling window is defined as a grid of (subframe_index, cell_index) subframes and
wherein the receiving section (203) receives HARQ-ACK codebook indicators, HCIs, in DL assignments that schedule the DL subframes in the bundling window, the HCIs indicating the cells whose HARQ-ACKs are to be fed back for each DL subframe in the bundling window; and
a control section (401) that performs control to transmit in a predetermined UL subframe HARQ-ACKs for the DL signals transmitted in the bundling window,
wherein the control section (401) determines the cells whose HARQ-ACK is to be fed back based on the largest HCI among the HCIs transmitted for each DL subframe in the bundling window and then determines the number of HARQ-ACK bits based on the determined cells.

2. The user terminal (20) according to claim 1, wherein the control section (401) is configured to determine resources for transmitting the HARQ-ACKs based on an ARI, Ack/nack Resource Indicator, of LTE release 10 or later transmitted in a subframe in which the maximum HCI is transmitted.

3. The user terminal (20) according to claim 1, wherein the control section (401) is configured to perform control to transmit the HARQ-ACKs for cells that are specified at least once by the HCIs transmitted for each subframe in which the DL assignment is transmitted.

4. The user terminal (20) according to one of claims 1 to 3, wherein the control section (401) is configured to transmit the HARQ-ACKs for all subframes in the bundling window by an uplink control channel.

5. The user terminal (20) according to claim 1, wherein, when UL assignments are transmitted in predetermined subframes within the bundling window, the control section (401) is configured to perform control so that the number of HARQ-ACK bits is determined based on DL DAIs, Downlink Assignment Indicators, of LTE release 10 or later transmitted in each subframe, the HCIs and UL DAIs of LTE release 10 or later transmitted in the predetermined subframes, and the UL assignment is transmitted in an uplink shared channel.

6. The user terminal (20) according to claim 5, wherein the control section (401) is configured to determine subframes whose HARQ-ACKs are to be transmitted based on the UL DAIs and/or the DL DAIs.

7. The user terminal (20) according to claim 5, wherein the control section (401) is configured to perform control to transmit the HARQ-ACKs for cells specified at least once by the HCIs transmitted for each subframe in which the DL assignment is transmitted.

8. A radio base station (10) that communicates with a user terminal (20) using TDD in a 3GPP system and that can use a plurality of cells, the radio base station comprising:
a transmission section (103) configured to perform DL transmission from each cell in a bundling window, wherein the bundling window is defined as a grid of (subframe_index, cell_index) subframes and
wherein the transmission section (203) is configured to transmit HARQ-ACK codebook indicators, HCIs, in DL assignments that schedule the DL subframes in the bundling window, the HCIs indicating the cells whose HARQ-ACKs are to be fed back for each DL subframe in the bundling window; and
a control section (301) configured to control reception of HARQ-ACKs fed back from the user terminal (20) for the DL signals transmitted in the bundling window, wherein:
the control section (301) is configured to determine the number of HARQ-ACK bits fed back from the user terminal (20) based on the largest HCI among the HCIs transmitted for each DL subframe in the bundling window.

9. A radio communication method for a user terminal (20) using TDD in a 3GPP system and that can communicate by using a plurality of cells, the radio communication method comprising:
receiving DL signals transmitted from a plurality of cells in a bundling window, wherein the bundling window is defined as a grid of (subframe_index, cell_index) subframes and
wherein receiving comprises receiving HARQ-ACK codebook indicators, HCIs, in DL assignments that schedule the DL subframes in the bundling window, the HCIs indicating the cells whose HARQ-ACKs are to be fed back for each DL subframe in the bundling window; and
transmitting in a predetermined UL subframe HARQ-ACKs for the DL signals transmitted in the bundling window,
wherein the user terminal (20) determines the cells whose HARQ-ACK is to be fed back based on the largest HCI among that HCIs transmitted for each DL subframe in the bundling window and then determines the number of HARQ-ACK bits based on the determined cells.

## Patentansprüche

1. Benutzerendgerät (20), das TDD in einem 3GPP-System verwendet, umfassend:
einen Empfangsabschnitt (203), der DL-Signale empfängt, die von einer Vielzahl von Zellen in einem Bündelungsfenster übertragen werden, wobei das Bündelungsfenster als ein Raster von (subframe_index, cell_index) Subframes definiert ist und
wobei der Empfangsabschnitt (203) HARQ-ACK-Codebuch-Indikatoren, HCls, in DL-Zuweisungen empfängt, die die DL-Subframes im Bündelungsfenster planen, wobei die HCls für jeden DL-Subframe im Bündelungsfenster die Zellen angeben, deren HARQ-ACKs rückgemeldet werden müssen; und
einen Steuerabschnitt (401), der Steuerung so durchführt, dass HARQ-ACKs für die im Bündelungsfenster übertragenen DL-Signale in einem vorbestimmten UL-Subframe übertragen werden,
wobei der Steuerabschnitt (401) die Zellen, deren HARQ-ACK rückgemeldet werden muss, auf Basis des größten HCl unter den für jeden DL-Subframe im Bündelungsfenster übertragenen HCls bestimmt und dann auf Basis der bestimmten Zellen die Anzahl von HARQ-ACK-Bits bestimmt.

2. Benutzerendgerät (20) nach Anspruch 1, wobei der Steuerabschnitt (401) so ausgelegt ist, dass er Ressourcen zum Übertragen der HARQ-ACKs auf Basis eines ARI, Ack/nack Resource Indicator, von LTE Release 10 oder höher, der in einem Subframe übertragen wird, in dem der maximale HCl übertragen wird, bestimmt.

3. Benutzerendgerät (20) nach Anspruch 1, wobei der Steuerabschnitt (401) so ausgelegt ist, dass er Steuerung so durchführt, dass die HARQ-ACKs für Zellen übertragen werden, welche mindestens einmal von den HCls spezifiziert werden, die für jeden Subframe übertragen werden, in dem die DL-Zuweisung übertragen wird.

4. Benutzerendgerät (20) nach einem der Ansprüche 1 bis 3, wobei der Steuerabschnitt (401) so ausgelegt ist, dass er die HARQ-ACKs für alle Subframes im Bündelungsfenster über einen Uplink-Steuerkanal überträgt.

5. Benutzerendgerät (20) nach Anspruch 1, wobei der Steuerabschnitt (401) so ausgelegt ist, dass er, wenn UL-Zuweisungen in vorbestimmten Subframes innerhalb des Bündelungsfensters übertragen werden, Steuerung so durchführt, dass die Anzahl von HARQ-ACK-Bits auf Basis von DL DAIs, Downlink Assignment Indicators, von LTE Release 10 oder höher, die in jedem Subframe übertragen werden, der HCIs und UL DAIs von LTE Release 10 oder höher, die in den vorbestimmten Subframes übertragen werden, bestimmt, und die UL-Zuweisung in einem gemeinsamen Uplink-Kanal übertragen wird.

6. Benutzerendgerät (20) nach Anspruch 5, wobei der Steuerabschnitt (401) so ausgelegt ist, dass er Subframes, deren HARQ-ACKs übertragen werden müssen, auf Basis der UL DAIs und/oder der DL DAIs bestimmt.

7. Benutzerendgerät (20) nach Anspruch 5, wobei der Steuerabschnitt (401) so ausgelegt ist, dass er Steuerung so durchführt, dass die HARQ-ACKs für Zellen übertragen werden, welche mindestens einmal von den HCIs spezifiziert werden, die für jeden Subframe übertragen werden, in dem die DL-Zuweisung übertragen wird.

8. Funkbasisstation (10), die mit einem Benutzerendgerät (20) kommuniziert, das TDD in einem 3GPP-System verwendet und das eine Vielzahl von Zellen verwenden kann, wobei die Funkbasisstation umfasst:
einen Übertragungsabschnitt (103), der so ausgelegt ist, dass er DL-Übertragung von jeder Zelle in einem Bündelungsfenster durchführt, wobei das Bündelungsfenster als ein Raster von (subframe_index, cell_index) Subframes definiert ist und
wobei der Übertragungsabschnitt (203) so ausgelegt ist, dass er HARQ-ACK-Codebuch-Indikatoren, HCIs, in DL-Zuweisungen überträgt, die die DL-Subframes im Bündelungsfenster planen, wobei die HCIs für jeden DL-Subframe im Bündelungsfenster die Zellen angeben, deren HARQ-ACKs rückgemeldet werden müssen; und
einen Steuerabschnitt (301), der so ausgelegt ist, dass er Empfang von HARQ-ACKs steuert, die vom Benutzerendgerät (20) für die im Bündelungsfenster übertragenen DL-Signale rückgemeldet werden, wobei:
der Steuerabschnitt (301) so ausgelegt ist, dass er die Anzahl von HARQ-ACK-Bits, die vom Benutzerendgerät (20) rückgemeldet werden, auf Basis des größten HCI unter den für jeden DL-Subframe im Bündelungsfenster übertragenen HCIs bestimmt.

9. Funkkommunikationsverfahren für ein Benutzerendgerät (20), das TDD in einem 3GPP-System verwendet und das unter Verwendung einer Vielzahl von Zellen kommunizieren kann, wobei das Funkkommunikationsverfahren umfasst:
Empfangen von DL-Signalen, die von einer Vielzahl von Zellen in einem Bündelungsfenster übertragen werden, wobei das Bündelungsfenster als ein Raster von (subframe_index, cell_index) Subframes definiert ist und
wobei das Empfangen das Empfangen von HARQ-ACK-Codebuch-Indikatoren, HCIs, in DL-Zuweisungen umfasst, die die DL-Subframes im Bündelungsfenster planen, wobei die HCIs für jeden DL-Subframe im Bündelungsfenster die Zellen angeben, deren HARQ-ACKs rückgemeldet werden müssen; und
Übertragen von HARQ-ACKs für die im Bündelungsfenster übertragenen DL-Signale in einem vorbestimmten UL-Subframe,
wobei das Benutzerendgerät (20) die Zellen, deren HARQ-ACK rückgemeldet werden muss, auf Basis des größten HCI unter den für jeden DL-Subframe im Bündelungsfenster übertragenen HCIs bestimmt und dann auf Basis der bestimmten Zellen die Anzahl von HARQ-ACK-Bits bestimmt.

## Revendications

1. Terminal d'utilisateur (20) utilisant un TDD dans un système 3GPP comprenant :
une section de réception (203) qui reçoit des signaux DL transmis à partir d'une pluralité de cellules dans une fenêtre de regroupement, dans lequel la fenêtre de regroupement est définie comme une grille de sous-trames (indice_sous-trame, indice_cellule) et
dans lequel la section de réception (203) reçoit des indicateurs de livre de codes de HARQ-ACK, HCI, dans des affectations DL qui planifient les sous-trames DL dans la fenêtre de regroupement, les HCI indiquant les cellules dont des HARQ-ACK doivent être renvoyés pour chaque sous-trame DL dans la fenêtre de regroupement ; et
une section de commande (401) qui effectue une commande pour transmettre dans une sous-trame UL prédéterminée des HARQ-ACK pour les signaux DL transmis dans la fenêtre de regroupement,
dans lequel la section de commande (401) détermine les cellules dont le HARQ-ACK doit être renvoyé sur la base du plus grand HCI parmi les HCI transmis pour chaque sous-trame DL dans la fenêtre de regroupement et détermine ensuite le nombre de bits HARQ-ACK sur la base des cellules déterminées.

2. Terminal d'utilisateur (20) selon la revendication 1, dans lequel la section de commande (401) est configurée pour déterminer des ressources pour transmettre les HARQ-ACK sur la base d'un indicateur de ressource ARI, Ack/nack, de libération LTE 10 ou transmis ultérieurement dans une sous-trame dans laquelle le HCI maximum est transmis.

3. Terminal d'utilisateur (20) selon la revendication 1, dans lequel la section de commande (401) est configurée pour exécuter une commande pour transmettre les HARQ-ACK pour des cellules qui sont spécifiées au moins une fois par les HCI transmis pour chaque sous-trame dans laquelle l'affectation DL est transmise.

4. Terminal d'utilisateur (20) selon l'une quelconque des revendications 1 à 3, dans lequel la section de commande (401) est configurée pour transmettre les HARQ-ACK pour toutes les sous-trames dans la fenêtre de regroupement par un canal de commande de liaison montante.

5. Terminal d'utilisateur (20) selon la revendication 1, dans lequel, lorsque des affectations UL sont transmises dans des sous-trames prédéterminées à l'intérieur de la fenêtre de regroupement, la section de commande (401) est configurée pour exécuter une commande de sorte que le nombre de bits de HARQ-ACK est déterminé sur la base de DL DAI, indicateurs d'affectation de liaison descendante, de libération LTE 10 ou transmis ultérieurement dans chaque sous-trame, des HCI et des UL DAI de libération LTE 10 ou transmis ultérieurement dans les sous-trames prédéterminées, et l'affectation UL est transmise dans un canal partagé de liaison montante.

6. Terminal d'utilisateur (20) selon la revendication 5, dans lequel la section de commande (401) est configurée pour déterminer des sous-trames dont les HARQ-ACK doivent être transmis sur la base des UL DAI et/ou des DL DAI.

7. Terminal d'utilisateur (20) selon la revendication 5, dans lequel la section de commande (401) est configurée pour exécuter une commande pour transmettre les HARQ-ACK pour des cellules spécifiées au moins une fois par les HCI transmis pour chaque sous-trame dans laquelle l'affectation DL est transmise.

8. Station de base radio (10) qui communique avec un terminal d'utilisateur (20) en utilisant un TDD dans un système 3GPP et qui peut utiliser une pluralité de cellules, la station de base radio comprenant :
une section de transmission (103) configurée pour effectuer une transmission DL à partir de chaque cellule dans une fenêtre de regroupement, dans laquelle la fenêtre de regroupement est définie comme une grille de sous-trames (indice_sous-trame, indice_cellule) et
dans laquelle la section de transmission (203) est configurée pour transmettre des indicateurs de livre de codes de HARQ-ACK, HCI, dans des affectations DL qui planifient les sous-trames DL dans la fenêtre de regroupement, les HCI indiquant les cellules dont les HARQ-ACK doivent être renvoyés pour chaque sous-trame DL dans la fenêtre de regroupement ; et
une section de commande (301) configurée pour commander une réception de HARQ-ACK renvoyés depuis le terminal d'utilisateur (20) pour les signaux DL transmis dans la fenêtre de regroupement, dans laquelle :
la section de commande (301) est configurée pour déterminer le nombre de bits HARQ-ACK renvoyés par le terminal d'utilisateur (20) sur la base du HCI le plus important parmi les HCI transmis pour chaque sous-trame DL dans la fenêtre de regroupement.

9. Procédé de communication radio pour un terminal d'utilisateur (20) utilisant un TDD dans un système 3GPP et qui peut communiquer en utilisant une pluralité de cellules, le procédé de communication radio comprenant les étapes consistant à :
recevoir des signaux DL transmis à partir d'une pluralité de cellules dans une fenêtre de regroupement, dans lequel la fenêtre de regroupement est définie comme une grille de sous-trames (indice de sous-trame, indice de cellule) et
dans lequel la réception comprend une réception d'indicateurs de livre de codes de HARQ-ACK, HCI, dans les affectations DL qui planifient les sous-trames DL dans la fenêtre de regroupement, les HCI indiquant les cellules dont les HARQ-ACK doivent être renvoyés pour chaque sous-trame DL dans la fenêtre de regroupement ; et
transmettre dans une sous-trame UL prédéterminée des HARQ-ACK pour les signaux DL transmis dans la fenêtre de regroupement,
dans lequel le terminal d'utilisateur (20) détermine les cellules dont le HARQ-ACK doit être renvoyé sur la base du plus grand HCI parmi ces HCI transmis pour chaque sous-trame DL dans la fenêtre de regroupement et détermine ensuite le nombre de bits HARQ-ACK sur la base des cellules déterminées.
